# EUROPEAN PATENT SPECIFICATION

(11) **EP 3 830 025 B1**
(45) Date of publication and mention of the grant of the patent: **06.04.2022**
(21) Application number: 19742793.3
(22) Date of filing: 30.07.2019
(51) Int. Cl.: C01B 13/02

(54) **OXYGEN GENERATOR AND METHOD FOR DECELERATING OR STOPPING THE OXYGEN PRODUCTION OF AN OXYGEN GENERATING COMPOSITION**
SAUERSTOFFGENERATOR UND VERFAHREN ZUR STEUERUNG DER SAUERSTOFFPRODUKTIONSRATE IN EINES SAUERSTOFFGENERATORS
GÉNÉRATEUR D'OXYGÈNE ET PROCÉDÉ POUR COMMANDER LA VITESSE DE PRODUCTION D'OXYGÈNE D'UN GÉNÉRATEUR D'OXYGÈNE

(30) Priority: 30.07.2018 EP 18186432
(43) Date of publication of application: 09.06.2021
(73) Proprietor: Diehl Aviation Gilching GmbH, 82205 Gilching (DE)
(72) Inventor: KALLFASS, Christoph, 74523 Schwäbisch Hall (DE); HINTERBERGER, Andreas, 81735 München (DE); KÜHN, Fritz, 85748 Garching (DE)
(74) Representative: Diehl Patentabteilung
(86) International application number: PCT/EP2019/070425
(87) International publication number: WO 2020/025573

(56) References cited:
- EP-A1- 3 323 471
- EP-A1- 3 323 782
- EP-A1- 3 323 783

## Description

The present invention relates to oxygen generators, methods and devices for generating oxygen in a controlled manner.

Humans cannot exist without oxygen. In many environments, however, oxygen supply is insufficient or there is a risk of emergency situations involving a shortage of oxygen, for example in SAR (search and rescue) applications, in submarines, in mines, in space capsules, and also in air planes. Air pressure decreases with increasing flight altitude, and at cruising altitudes of many aircrafts, in particular long-range aircrafts, sufficient oxygen for human beings is no longer available. Therefore, the aircraft cabins are pressurized in order to ensure sufficient oxygen supply. In case of a sudden de-pressurization of an aircraft cabin, oxygen masks must be available, which supply oxygen to crew and passengers until the aircraft reaches a flight level where sufficient oxygen is available.

The oxygen which is provided by these emergency systems is typically produced by so-called "chlorate candles" or "oxygen candles". These chemical oxygen generators contain chlorates or perchlorates as an oxygen source, as well as various additives such as fuels, catalysts, binders and moderators. Chlorate candles are often in the form of cylindrical rods, i.e. they have a shape similar to candles. Chlorate candles are disclosed, for example, in WO 97/43210.

Known chlorate candles require high temperatures at which the oxygen production takes place. Namely, in chlorate candles the decomposition reaction requires a temperature of about 350°C for initiation, and the oxygen is released at temperatures between 450°C and 700°C. Therefore, effective heat insulation of chlorate candles is required, resulting in a weight and size penalty. Furthermore, decomposition of chlorates and perchlorates tends to produce toxic side products, in particular chlorine, which must be removed from the oxygen stream, thus additionally adding size and weight. Furthermore, there is a risk of system failure. In chlorate candles the reaction zone is normally liquid, i.e. there is a liquid zone traveling through the candle, starting at the point of ignition. The liquid zone within the otherwise solid candle considerably destabilizes the candle such that mechanical shocks or even slight vibrations may result in separation of the candle portions, thus interrupting the heat transfer and discontinuing the chlorate or perchlorate decomposition. In such a case, oxygen production may be interrupted, although oxygen is still vitally needed.

A different type of chemical oxygen generators uses peroxides as oxygen sources, for example sodium percarbonate, sodium perborate, or an urea adduct of hydrogen peroxide. Decomposition of the peroxides yields oxygen, and the decomposition reaction can be started by contacting the peroxide compounds with an appropriate enzyme or transition metal catalyst. Chemical oxygen generators of this type are disclosed in US 2 035 896, WO 86/02063, JPS 61227903, and DE 196 02 149.

Many known peroxide-based oxygen generators use water for providing contact between the peroxides and the catalysts. Unfortunately, water freezes at 0°C and, therefore, no oxygen can be produced below 0°C, while some emergency systems must be operational below 0°C. Also, the decomposition of peroxides in aqueous solutions may result in vehement effervescing of the reaction mixture. As a consequence, an oxygen generating device containing a peroxide-based oxygen generating composition must have a complicated structure.

A new concept is disclosed in EP 3 323 471 A1, EP 3 323 782 A1 and EP 3 323 783 A1. These documents disclose devices, compositions and methods for generating oxygen from peroxides in ionic liquids. The compositions comprise at least one oxygen source, at least one ionic liquid, and at least one metal oxide compound, wherein the oxygen source comprises a peroxide compound, the ionic liquid is in the liquid state at least in a temperature range from -10°C to +50°C, and the metal oxide compound is an oxide of one single metal or of two or more different metals, said metal(s) being selected from the metals of groups 2 to 14 of the periodic table of the elements.

The use of ionic liquids provides for distinct advantages. Ionic liquids are environmentally friendly compounds. They are liquid over a broad temperature range and exhibit a low to non-existing vapor pressure. Moreover, these liquids are non-flammable and are even used as flame retardants which makes them highly attractive for the use in an air plane. Many of their other properties can be varied by changing their molecular structures. Their high heat capacity enables them to dissipate the reaction heat from the decomposition of peroxides to oxygen.

The compositions disclosed in EP 3 323 471 A1, EP 3 323 782 A1 and EP 3 323 783 A1 produce breathable oxygen reliably and continuously in a wide temperature range, also including subfreezing temperatures. The oxygen produced is at a low temperature, such as below 150°C or even lower. It is typically free from toxic or otherwise noxious components such as chlorine or carbon monoxide. The compositions are capable to produce oxygen over an extended period of time and with a significant flow rate, and promptly upon demand.

However, all oxygen generating compositions described above have in common that they produce oxygen at a flow rate inherent to the particular system, and once the decomposition reaction of the oxygen source has started, it cannot be stopped until all of the oxygen source has been decomposed. Thus, there may be situations, where oxygen is produced although it is not needed or not needed in the amount produced, while later, when oxygen or more oxygen may be needed again, there is no longer any oxygen or no longer enough oxygen available. Such situations occur frequently in SAR applications, in mining, submarine and space flight applications. If in a conventional oxygen generator the oxygen production is interrupted, intentionally or unintentionally (as may happen in chlorate oxygen candles), there is no possibility to restart the oxygen production.

It would be beneficial to provide a solution to at least some of the problems of the prior art outlined above and to provide an oxygen generator allowing to modify the oxygen production rate, i.e. to decrease the oxygen flow rate such that it can be increased later again. It would be also beneficial to provide an oxygen generator which allows to stop the oxygen production when no oxygen is needed, and to restart the oxygen production whenever oxygen is needed. It would be particularly beneficial, when stoppage and restart of the oxygen production could be performed several times.

In addition, it would be beneficial if this oxygen generator would be capable of producing breathable oxygen reliably and continuously in a wide temperature range, and preferably including subfreezing temperatures. The oxygen produced should be at a low temperature, such as below 150°C or even lower. Desirably, the oxygen should be free from toxic or otherwise noxious components such as chlorine or carbon monoxide. It would be also beneficial if the oxygen generator would be capable to produce oxygen over an extended period of time and with a significant flow rate, and preferably promptly upon demand.

The present invention relates to an oxygen generator comprising a composition for generating oxygen comprising an oxygen source, an ionic liquid and a metal oxide compound, and an acidic compound for decelerating or stopping oxygen production, or, if the ionic liquid is an acidic compound or contains an acidic compound, optionally, a composition for generating oxygen comprising an oxygen source, an ionic liquid, a metal oxide compound, a basic compound, and a further acidic compound for decelerating or stopping the oxygen production, wherein the oxygen source comprises a peroxide compound, the ionic liquid is in the liquid state at least in a temperature range from -10°C to +50°C, the metal oxide compound is an oxide of one single metal or of two or more different metals, said metal(s) being selected from the metals of groups 2 to 14 of the periodic table of the elements. This means that in case the ionic liquid is an acidic compound or contains an acidic compound the composition for generating oxygen may comprise the oxygen source, the ionic liquid and the metal oxide compound or it may comprise the oxygen source, the ionic liquid, the metal oxide compound and the basic compound.

The present invention also relates to a method for decelerating or stopping oxygen production of an oxygen generating composition, the method comprising providing an oxygen source, providing an ionic liquid, providing a metal oxide compound, generating oxygen by contacting the oxygen source, the ionic liquid and the metal oxide compound, and decelerating or stopping the oxygen production by adding an acidic compound to the oxygen source, the ionic liquid and the metal oxide compound, or, if the ionic liquid is an acidic compound or contains an acidic compound, optionally, providing an oxygen source, providing an ionic liquid, providing a metal oxide compound, providing a basic compound, generating oxygen by contacting the oxygen source, the ionic liquid, the metal oxide compound and the basic compound and decelerating or stopping the oxygen production by adding a further acidic compound to the oxygen source, the ionic liquid, the metal oxide compound and the basic compound, wherein the oxygen source comprises a peroxide compound, the ionic liquid is in the liquid state at least in the temperature range from -10°C to +50°C and the metal oxide compound is an oxide of a single metal or of two or more different metals, said metal(s) being selected from the metals of groups 2 to 14 of the periodic table of the elements. This means that in case the ionic liquid is an acidic compound or contains an acidic compound the method may comprise providing the oxygen source, providing the ionic liquid, providing the metal oxide compound and generating oxygen by contacting the oxygen source, the ionic liquid and the metal oxide compound or it may comprise providing the oxygen source, providing the ionic liquid, providing the metal oxide compound, providing the basic compound and generating oxygen by contacting the oxygen source, the ionic liquid, the metal oxide compound and the basic compound.

The present invention also relates to the aforementioned oxygen generator for generating oxygen in a controlled manner by adding the acidic compound or, optionally, a basic compound to a composition for generating oxygen, the oxygen generator comprising a reaction chamber housing a composition for generating oxygen, the composition comprising a combination of constituents consisting of an oxygen source, an ionic liquid, and a metal oxide compound, at least one dosing device housing an acidic compound and, optionally, at least one dosing device housing a basic compound, the dosing device(s) being adapted to introduce the acidic compound and, optionally, the basic compound into the reaction chamber, means for maintaining at least one of the oxygen source, the ionic liquid and the metal oxide compound physically separated from the remaining constituents, means for establishing physical contact of the oxygen source, the ionic liquid and the metal oxide compound, and means for allowing oxygen to exit the reaction chamber, wherein the metal oxide compound is an oxide of an single metal or of two or more different metals, said metal(s) being selected from the metals of groups 2-14 of the periodic table of the elements, the oxygen source comprises a peroxide compound, and the ionic liquid is in the liquid state at least in the temperature range from -10°C to +50°C. In said oxygen generator the oxygen production rate is adjusted by adding the acidic compound or, optionally, the basic compound to the composition for generating oxygen. If oxygen production shall be decreased or stopped, the acidic compound is added and if oxygen production shall be increased, started or restarted, the basic compound is added.

In said oxygen generator the oxygen production rate is controlled by adding the acidic compound or, optionally, the basic compound to the composition for generating oxygen depending on whether oxygen production shall be decreased, stopped, increased, started or restarted. If oxygen production shall be decreased or stopped this occurs by the addition of the acidic compound and if it shall be increased, started or restarted this occurs by the addition of the basic compound.

Each of the dosing devices may be adapted to introduce the acidic compound or the basic compound by providing a feed line leading from a reservoir housing the acidic compound or the basic compound to the reaction chamber. The feed line may be equipped with a valve the opening of which allows the acidic compound or the basic compound to flow, e. g. due to gravity, into the reaction chamber. When closed or if the valve is a one-way valve the valve may also prevent flow of fluid or oxygen from the reaction chamber into the feed line or even in the reservoir. The reservoir may be equipped with a piston or slide bar for pressing the basic compound or the acidic compound via the feed line into the reaction chamber. The counterpressure provided by the piston or slide bar can prevent that fluid or generated oxygen passes the feed line from the reaction chamber into the reservoir such that a valve is not absolutely required, in particular when the feed line has a small diameter.

Technical implementations of the inventive concept as claimed herein include an oxygen generator comprising a composition for generating oxygen, a method for generating oxygen, a method for decelerating or stopping the oxygen production of the oxygen generator, and the oxygen generator for generating oxygen in a controlled manner.

In the method of this invention, oxygen is produced from the composition for generating oxygen, and the oxygen production is decelerated or stopped by adding an acidic compound.

As can be easily understood, the constituents of the composition for generating oxygen are corresponding, irrespective of which technical implementation of the invention is contemplated. Therefore, any disclosure provided for a particular implementation, such as oxygen generator or method is analogously applicable to the other implementations of this invention.

A composition for generating oxygen, an oxygen generator (including a composition for generating oxygen and an acidic compound and/or a basic compound), and a method for decelerating or stopping the oxygen production in the sense of this invention is a composition, generator or method for generating gaseous, in particular breathable, oxygen, in particular in an amount and at an oxygen production rate sufficient to maintain breathing of a human being for a limited time. Any composition, generator or method yielding oxygen as a side reaction product, in particular in an amount and at an oxygen production rate not sufficient to maintain breathing of a human being for a limited time, does not constitute a composition, a generator, a method or device in the sense of this invention.

The compositions for generating oxygen used in the invention comprise at least the following constituents: preferably a peroxide compound as an oxygen source, a metal oxide compound as a catalyst triggering the oxygen release reaction, and an ionic liquid as a carrier for providing contact between the oxygen source and the catalyst, and for dissipating the heat generated during the peroxide decomposition reaction. The oxygen generator, the method for decelerating or stopping the oxygen production and the device for generating oxygen in a controlled manner enable deceleration or complete stopping of oxygen production before the total possible amount of oxygen is released from the composition. This allows a later increase or restart of oxygen production when oxygen or an increased amount of oxygen or oxygen production rate is required. Furthermore, decelerating oxygen production allows adaption of the oxygen production rate to its real need such that not more oxygen per time unit is produced than required. Due to the possibility to adapt oxygen production to the need of oxygen the oxygen generator, the method and the device according to the invention allow for a longer provision of sufficient oxygen for a human being and therewith a longer survival of the human being in an emergency situation than with oxygen generators, methods and devices providing oxygen in an uncontrolled manner.

Depending on the kind of the acidic compound and the amount of the acidic compound it is possible to reduce or completely stop an already occurring oxygen production. The invention enables a precise adjustment of the oxygen production rate. If oxygen has to be provided for a defined time, the oxygen generator or the device can contain a smaller amount of the oxygen generating composition than oxygen generators and devices providing oxygen in an uncontrolled manner. Thus, the weight of such an oxygen generator or device comprising the oxygen generating composition can be lower than the weight of an oxygen generator or device known in the art. This is important, e. g. if the oxygen generator or the device is used as an emergency system in an airplane.

For the purpose of this invention, "soluble" means a solubility of at least 10 nmol (nanomol) metal salt in 1 g ionic liquid. Metal oxide catalysts are, at most, partially soluble, i.e. have a solubility of less than 10 nmol/1g ionic liquid, or insoluble, i.e. have a solubility of less than 0.1 nmol metal oxide/1g ionic liquid.

Peroxide compounds such as hydrogen peroxide adduct compounds, can be decomposed in ionic liquids by contacting them with metal oxide compounds in a similar manner as in aqueous solution, but without the disadvantages of reactions catalyzed in aqueous solutions. Exemplary compositions in the sense of this invention do not contain any water or at least only traces of water contained in the constituents of the composition. In particular, decomposition of peroxide compounds in ionic liquids yields breathable oxygen at low temperatures, and without requiring bulky thermal insulations for the oxygen generating device.

This can be attributed to the use of ionic liquids as a medium for providing contact between the oxygen source and the catalyst.

Ionic liquids are salts in the liquid state. Therefore, any salt that melts without decomposing or vaporizing yields an ionic liquid. Sometimes, salts which are liquid below the boiling point of water are considered as ionic liquids. Technically interesting are in particular those ionic liquids which are in the liquid state at relatively low temperatures such as at room temperature or even below room temperature.

An ionic compound is considered as an ionic liquid herein when it is in the liquid state at least in a temperature range from -10°C to +50°C (at standard pressure of 10⁵ Pa). Exemplary ionic liquids are in the liquid state at least from -30°C to +70°C, and further exemplary ionic liquids are in the liquid state in an even broader temperature range such as from -70°C to +150°C. All temperatures referring to the liquid state of ionic liquid given herein particularly refer to the ionic liquid at standard pressure of 10⁵ Pa.

The properties of ionic liquids can be modified and adapted to the particular needs by varying the chemical structure. Typically, ionic liquids are thermally stable, have wide liquid regions, a high heat capacity and nearly no vapor pressure. Most of them are incombustible. They can be even used as flame retardants. Reference is made to US 2011/0073331 A1 disclosing ionic liquid flame retardants, and quoting literature disclosing preparation methods (paragraph 0127).

As indicated above, the ionic liquids used in the present invention should be in the liquid state at a low temperature, such as down to -10°C, or down to -30°C or even below. Such ionic liquids are salts consisting of organic cations and organic or inorganic anions, and both cations and anions are bulky. In exemplary embodiments, they are bulky and asymmetric. As a general rule, the melting temperature decreases with increasing bulkiness and decreasing symmetry of cations and anions. Combinations of highly bulky and asymmetric cations and anions may not freeze down to temperatures as low as -120°C. Many ionic liquids are available which are liquid at -70°C and above.

Suitable cations are, for example, imidazolium, pyrrolidinium, ammonium, pyridinium, pyrazolium, piperidinium, phosphonium, and sulfonium cations. The cations may or may not have substituents. Particularly, the cations may have one or more substituents, for example alkyl side chains such as methyl, ethyl or butyl side chains. The substitution may be symmetric or asymmetric.

Suitable anions include, for example, dimethylphosphate, methylsulfate, ethylsulfate, trifluoromethylsulfonate, bis(trisfluoromethylsulfonyl)imide, chloride, bromide, iodide, tetrafluoroborate, hexafluorophosphate, acetate, and but-3-enoate. In the case of "small" anions such as chloride, bromide, and iodide, particularly bulky cations can be selected, in order to provide for the desired low temperature liquidity.

### Some exemplary ionic liquids are

- 1-butyl-3-methylimidazoliumdimethylphosphate ([BMlM][PO₄Me₂]),
- 1,3-dimethylimidazoliumdimethylphosphate ([MMlM][PO₄Me₂]),
- 1-butyl-3-methylimidazoliumacetate ([BMIM][OAc]),
- 1-ethyl-3-methylimidazoliumethylsulfate ([EMIM][EtSO₄]),
- tetraethylammonium but-3-enoate ([NEt₄][but-3-enoat]),
- 1,3-dimethylimidazoliummethylsulfate ([MMIM][MeSO₄]),
- 1-butyl-3-methylimidazoliummethylsulfate ([BMIM][MeSO₄]),
- 1,1-butylmethylpyrrolidiniumbis(trifluoromethylsulfonyl)imide ([BMPyrr][TFSI]),
- butyltrimethylammoniumbis(trifluoromethylsulfonyl)imide ([Me₃BuN][TFSI]),
- 1-butyl-3-methylimidazoliumtrifluoromethanesulfonate ([BMIM][OTf]),
- 1-ethyl-3-methylimidazolium acetate ([EMIM][OAc]),
- tetrabutylammonium arginine ([TBA][Arg]),
- trimethylammonium propanesulfonic acid hydrogen sulfate ([TMPSA][HSO₄]),
- 1-(4-sulfobutyl)-3-methylimidazolium hydrogen sulfate ([SBMIM][HSO₄]),
- diethylmethylammonium methanesulfonate ([NEt₂MeH][MeSO₃]), and
- 1-ethyl-3-methylimidazolium hydrogen sulfate ([EMIM][HSO₄]). [NEt₄][but-3-enoate], [EMIM][OAc] and [TBA][Arg] are basic ionic liquids, and [TMPSA][HSO₄], [SBMIM][HSO₄], [NEt₂MeH][MeSO₃] and [EMIM][HSO₄] are acidic ionic liquids.

Further ionic liquids can be found in "Neue Anwendungen für ionische Flüssigkeiten in der Technik und Medizintechnik" (New applications for ionic liquids in technology and medical technology), Dissertation by F. Stein, University of Rostock, Germany, 2014, at page 43.

The ionic liquids usable herein are, however, not particularly limited. It is only required that they are liquid and stable (i.e. they do not decompose) in the desired temperature range. Of course, the ionic liquids should not react with any constituents of the oxygen generating composition, the acidic compound and the basic compound. The ionic liquids may be used singly or in combinations of two or more. Thus, in exemplary embodiments, this invention uses ionic liquid formulations containing one or more ionic liquids and, optionally, contain further additives which do not detrimentally interfere with the peroxide decomposition reaction.

As an oxygen source, peroxide compounds, in particular solid hydrogen peroxide adduct compounds are used. Solid hydrogen peroxide adduct compounds constitute suitable and stable substituents for liquid hydrogen peroxide, are easily storable, long term stable and safe to work with. Exemplary oxygen sources are alkali percarbonates, e.g. sodium percarbonate (Na₂CO₃ x 1.5H₂O₂), alkali perborates, e.g. sodium perborate (NaBO₃ x 4H₂O, NaBO₃ x H₂O), and urea hydrogen peroxide (UHP). In UHP urea and hydrogen peroxide are present in a molar ratio of about 1:1.

The peroxide compounds are not particularly limited, as long as they are stable under usual storage conditions. Exemplary peroxide compounds are stable also at elevated temperatures, for example in the vicinity of a fire. The peroxide compounds can be soluble or partially soluble or insoluble in the ionic liquids. The peroxide compounds can be used singly or in combinations of two or more, i.e. as oxygen source formulations containing, optionally, further additives which do not detrimentally interfere with the peroxide decomposition reaction.

In exemplary embodiments, the decomposition reaction of the peroxide compound is catalyzed by metal oxide compounds. Suitable metal oxide compounds are, for example, those which are known to catalyze the decomposition of peroxides in aqueous solutions.

Generally speaking, metal oxide compounds catalyzing peroxide decomposition in compositions comprising ionic liquids, are oxides of one single metal or of two or more different metals. The metal or the metals are selected from the group which consists of the elements of groups 2 to 14 of the periodic table of the elements. The periodic table has 18 groups (see: Pure and Applied chemistry, vol. 60, 3, pages 431-436).

In exemplary embodiments the metal oxide compound is an oxide of one or more metals belonging to the fourth period of the periodic table of the elements. In an alternative embodiment, the metal oxide compound is an oxide comprising, in addition to one or more metals belonging to the fourth period, one or more metal(s) belonging to the second and/or third and/or fifth and/or sixth period(s).

In further exemplary embodiments, the metal oxide compound is an oxide of one or more metals belonging to the fifth and/or sixth period of the periodic table.

In all embodiments, each metal may be present in one single oxidation state or in different oxidation states.

The metal oxide compounds may be used singly or in combinations of two or more different metal oxide compounds, i.e. metal oxide formulations may be used comprising one or more metal oxide compounds and, optionally, further additives which do not detrimentally interfere with the peroxide decomposition reaction.

Many metal oxide compounds are transition metal oxides.

Such transition metal oxides may contain one transition metal, and may as well contain two or more different transition metals. Each transition metal may be present in one single or in different oxidation states. In addition, the transition metal oxides may contain one or more non-transition metals. The transition metal oxides may be used singly or in combinations of two or more different transition metal oxides.

Exemplary transition metal oxide catalysts include oxides of manganese, cobalt, chromium, silver and copper, and mixed oxides of iron and another transition metal such as cobalt, copper, nickel, or manganese, mixed oxides of manganese and another transition metal such as cobalt, nickel, or copper, and mixed oxides containing nickel and cobalt.

As regards structural types, spinel type oxides, ilmenite type oxides, and perovskite type oxides may be specifically mentioned.

As exemplary compounds catalyzing the peroxide decomposition reaction may be mentioned: manganese (IV) oxide (MnO₂), cobalt (II, III) oxide (CO₃O₄), chromium (VI) oxide (CrO₃), silver (I) oxide (Ag₂O), Fe (II, III) oxide (Fe₃O₄), and copper (II) oxide (CuO), as well as spinel type mixed metal oxides like cobalt iron oxide (CoₓFe₃₋ₓO₄, with 0 ≤ x ≤ 3), such as CoFe₂O₄, Co_{1.5}Fe_{1.5}O₄, and Co₂FeO₄, copper iron oxide (CuₓFe₃₋ₓO₄, with 0 ≤ x ≤ 3), such as CuFe₂O₄, nickel iron oxides (NiₓFe₃₋ₓO₄, with 0 ≤ x ≤ 3), manganese iron oxides (MnₓFe₃₋ₓO₄, with 0 ≤ x ≤ 3), copper manganese oxides such as Cu_{1.5}Mn_{1.5}O₄, cobalt manganese oxides such as Co₂MnO₄, nickel cobalt oxides such as NiCo₂O₄, as well as ilmenite type oxides like nickel manganese oxides such as NiMnO₃or oxides containing more than two transition metals, for example LaFeₓNi₁₋ₓO3, with 0 ≤ x ≤ 1, or LaₓSr₁₋ₓMnO₃with 0 ≤ x ≤ 1.

Transition metals as understood herein are those elements which have an incomplete d-shell, or which may form ions having an incomplete d-shell, including lanthanides and actinides. It goes without saying that only oxides may be used which undergo a redox reaction with hydrogenperoxide. Zincoxide, for example, may not be used as a catalyst, although zinc constitutes a transition metal. It is, however, stressed that the metal oxide compounds are not limited to transition metal oxides. Rather, the metal oxide compounds may be oxides of main group metals, such as PbO₂, or oxides of main group metals and transition metals in combination, such as La_{0.5}Sr_{0.5}MnO₃.

The acidic compounds according to exemplary embodiments are inorganic acids, organic acids, acidic salts, or ionic liquids with acidic properties.

Examples for inorganic acids are hydrochloric acid, sulfuric acid, nitric acid and phosphoric acid; examples for organic acids are acetic acid, succinic acid, citric acid, and benzoic acid, examples for acidic salts are sodium hydrogen sulfate and monopotassium phosphate, and examples for ionic liquids with acidic properties are 1-ethyl-3-methylimidazolium hydrogen sulfate ([EMIM][HSO₄]), trimethylammonium propanesulfonic acid hydrogen sulfate ([TMPSA][HSO₄]), 1-(4-sulfobutyl)-3-methylimidazolium hydrogen sulfate ([SBMlM][HSO₄]) and diethylmethylammonium methanesulfonate ([NEt₂MeH][MeSO₃]).

In the oxygen generators of the present invention, the acidic compounds ("acids") may be provided in liquid form. Liquid forms include the pure liquid compound, concentrated or diluted solutions of liquids or gases (for example concentrated or diluted solutions of hydrochloric acid or acetic acid), and solutions and dispersions of solid acids or acidic salts in a solvent or dispersing agent. Acids in liquid form can be, e. g., usual mineral acids such as hydrochloride acid, sulphuric acid, nitric acid and phosphoric acid. Acids in liquid form may also be solutions of acidic salts such as succinic acid, sodium hydrogen sulphate, potassium dihydrogen phosphate or crotonic acid. The acid may also be a pure liquid compound such as acetic acid or valeric acid.

Exemplary solvents or dispersing agents are water and ionic liquids. Ionic liquids having high viscosity can be used, for example, in admixture with ionic liquids having lower viscosity.

In exemplary embodiments, the acidic compound or the further acidic compound is provided in solid form, for example in the form of a powder, of pellets or beads. It is also possible that the acidic compound or the further acidic compound is not added from outside to the running oxygen generating reaction but from one or more tuner compact(s) that are added to the oxygen generating composition before or at the beginning of the reaction. Tuner compacts are pellets comprising the acidic compound or the further acidic compound in solid form and having two or more layers that are able to release the acidic compound or the further acidic compound at a predetermined time after start of the oxygen generating reaction such that the acidic compound or the further acidic compound is added to the composition for generating oxygen by release from the tuner compact(s). Optionally, it is also possible that the tuner compact comprises at least one layer releasing the basic compound or a further basic compound at another time than the acidic compound or the further acidic compound, wherein the basic compound or the further basic compound is also present in solid form. In this way it is possible to release the acidic compound or the further acidic compound and, optionally, the basic compound or the further basic compound without access to the composition for generating oxygen from outside. This allows to adjust oxygen production rate such that no extrema arise. Acidic compounds that may be provided in a solid form are solid acids such as succinic acid, citric acid or benzoic acid, and acidic salts such sodium hydrogen sulfate or monopotassium phosphate.

The basic compounds ("bases") according to exemplary embodiments are provided in solid form, for example in the form of a powder, of pellets or of beads. According to further exemplary embodiments the basic compounds are provided in the form of the pure liquid compounds, or in the form of concentrated or diluted solutions or dispersions in a solvent or dispersing agent.

Exemplary solvents or dispersing agents are water and ionic liquids. Ionic liquids having high viscosity may be used, for example, in admixture with ionic liquids having lower viscosity.

Exemplary bases are hydroxides such as potassium hydroxide, sodium hydroxide and calcium hydroxide, basic salts such as potassium phosphate, sodium acetate, sodium percarbonate, potassium carbonate, basic oxides such as calcium oxide, and ionic liquids with basic properties, such as 1-ethyl-3-methylimidazolium acetate ([EMIM][OAc]), tetrabutylammonium arginine ([TBA][Arg]), and tetrabutylammonium but-3-enoate ([NEt₄][but-3-enoate]).

In the context herein, the term "composition" includes embodiments wherein all constituents of the composition are mixed, i.e. are in contact with each other, as well as embodiments wherein the constituents are not in contact with each other, i.e. are physically separated, or wherein at least not all constituents are in contact with each other. When ionic liquids without acidic functionality, or even ionic liquids having basic functionality are used, the decomposition of the peroxide compound starts as soon as the catalyst comes into contact with the peroxide compound, in the ionic liquid, or at least shortly thereafter. Therefore, the constituents of the composition for generating oxygen must be stored in a condition wherein the catalyst cannot trigger the release of oxygen from the peroxide compound. This can be achieved by providing the composition for generating oxygen in the form of a "kit of parts", i.e. as a combination of at least two components, the two components comprising the at least one oxygen source, the at least one ionic liquid, and the at least one catalyst compound. In the at least two components, at least one of the three constituents (the oxygen source(s), the ionic liquid(s), and the catalyst is not in contact with the other constituents of the composition for generating oxygen.

For example, the composition may comprise a first component and a second component, the first component comprising the oxygen source and the catalyst, and the second component comprising the ionic liquid or the first component comprising the oxygen source and the ionic liquid, and the second component comprising the catalyst or the first component comprising the ionic liquid and the catalyst, and the second component comprising the oxygen source.

The situation may be different when the ionic liquid has acidic properties or when the ionic liquid contains a compound having acidic properties.

The inventors have found that the peroxide decomposition reaction does not proceed or is at least decelerated in an acidic environment. The inventors have further found, that in compositions for generating oxygen comprising an acidic ionic liquid, the peroxide decomposition reaction can be started by adding a basic compound to the ionic liquid, the catalyst and the peroxide.

Accordingly, an exemplary composition for generating oxygen comprises an oxygen source, a metal oxide compound as a catalyst, an acidic ionic liquid (an ionic liquid which is acidic itself, or which is acidic because it contains an acidic compound) and a basic compound. The oxygen source comprises a peroxide compound, the ionic liquid is in the liquid state at least in a temperature range from -10°C to +50°C, the metal oxide compound is an oxide of a single metal or of two or more different metals, said metal(s) being selected from the metals of groups 2-14 of the periodic table of the elements.

An exemplary oxygen generator comprises the above composition for generating oxygen and a further acidic compound for decelerating or stopping the oxygen production.

A further exemplary composition for generating oxygen comprises an oxygen source, a metal oxide compound as a catalyst, and an ionic liquid (a neutral ionic liquid or a basic ionic liquid, i.e. an ionic liquid which is basic itself or which is basic because it contains a basic compound). The oxygen source comprises a peroxide compound, the ionic liquid is in the liquid state at least in a temperature range from -10°C to +50°C, and the metal oxide compound is an oxide of a single metal or of two or more different metals, said metal(s) being selected from the metals of groups 2-14 of the periodic table of the elements.

A further exemplary oxygen generator comprises the above composition for generating oxygen and an acidic compound for decelerating or stopping oxygen production.

The compositions for generating oxygen may comprise from about 10 to 80 weight% of one or more oxygen sources, from about 20 to 80 weight% of one or more ionic liquids, and from more than 0 up to about 20 weight% of one or more metal oxide catalysts. In exemplary embodiments, the oxygen source or mixture of oxygen sources constitutes from 40 to 70 weight%, the ionic liquid or mixture of ionic liquids constitutes from 30 to 60 weight%, and the catalyst or mixture of catalysts constitutes from more than 0 up to about 10 weight% of the composition. In some embodiments, the oxygen source may constitute up to 98 weight% of the composition, with the amounts of ionic liquid and catalyst being present in amounts as low as about 1% by weight, each. Optionally, further constituents may be present, for example silicon dioxide (as a heat sink) and/or radical scavengers, such as resorcinol, 2-methylhydrochinone, eugenol, phenol, and 4-propylphenol, all of which reduce the peroxide decomposition rate. In some embodiments, the amounts of such additional constituents do not exceed about 20 weight% of the composition. All constituents together add up to 100 weight%.

In the case of acidic ionic liquids, exemplary compositions also comprise a basic compound. The basic compound may be added in an amount which is at least sufficient to neutralize the ionic liquid. The amounts of the remaining constituents of the compositions are lessened proportionally.

An exemplary method for generating oxygen comprises providing an oxygen source, providing an ionic liquid (neutral or basic), providing a metal oxide compound, and generating oxygen by contacting the oxygen source, the ionic liquid and the metal oxide compound. The oxygen source is a peroxide compound, the ionic liquid is in the liquid state at least in the temperature range from -10°C to +50°C, the metal oxide compound is an oxide of one single metal or of two or more different metals, said metal(s) being selected from the metals of groups 2 to 14 of the periodic table of the elements.

According to an exemplary embodiment, the catalyst and the ionic liquid are provided as a first component, the oxygen source is provided as a second component, and the step of contacting comprises mixing the first component and the second component.

According to a further exemplary embodiment, the oxygen source and the catalyst are provided as a first component, the ionic liquid is provided as a second component, and the step of contacting comprises mixing the first component and the second component.

When the oxygen source and the catalyst are provided as one single component, i.e. in an admixed state, both the oxygen source and the catalyst should be thoroughly dried before mixing. Otherwise, the oxygen source may be decomposed inadvertently. In the absence of any mediator, for example water or an ionic liquid, the solid oxygen source and the solid catalyst constitute long-term stable mixtures.

According to a further exemplary embodiment, the oxygen source and the ionic liquid are provided as a first component, the catalyst is provided as a second component, and the step of contacting comprises mixing the first component and the second component.

A further exemplary method for generating oxygen comprises providing an oxygen source, providing an acidic ionic liquid, providing a metal oxide compound, providing a basic compound, and generating oxygen by contacting the oxygen source, the ionic liquid, the metal oxide compound and the basic compound. The oxygen source is a peroxide compound, the ionic liquid is in the liquid state at least in the temperature range from -10°C to +50°C, and the metal oxide compound is an oxide of one single metal or of two or more different metals, said metal(s) being selected from the metals of groups 2 to 14 of the periodic table of the elements.

According to an exemplary embodiment, the oxygen source, the catalyst and the ionic liquid are provided as a first component, the basic compound is provided as a second component, and the step of contacting the oxygen source, the ionic liquid, the catalyst and the basic compound comprises mixing the first component and the second component.

According to a further exemplary embodiment, the oxygen source is provided as a first component, the ionic liquid and the catalyst are provided as a second component, and the basic compound is provided as a third component, and the step of contacting comprises mixing the first component, the second component and the third component.

In the above methods for generating oxygen, the oxygen is produced with a particular production rate and for a particular time. The production rate and time can be influenced to some extent by appropriately selecting the type and amounts of the constituents, however, each oxygen generator having a particular combination of constituents produces oxygen at a rate inherent to that particular combination. There is no possibility to influence a running decomposition reaction.

The present invention provides the possibility to stop the peroxide decomposition reaction before the whole amount of oxygen is released. Alternatively, the oxygen production rate may be not stopped, but only decreased. Those effects are achieved by adding an appropriate amount of an acidic compound. Depending on the type and the amount of acid, the oxygen production is stopped or is only decreased to a greater or lesser extent. The interruption or deceleration of the oxygen production may be observed instantaneously upon addition of the acid to the oxygen generating composition.

The present invention provides also the possibility to restart an interrupted decomposition reaction or to increase the oxygen production rate of a running decomposition reaction. These effects can be achieved by adding an appropriate amount of a basic compound to the composition for generating oxygen. Restart of the oxygen production or acceleration of the oxygen production may be observed instantaneously upon addition of the basic compound to the composition for generating oxygen. After restart of an interrupted decomposition process, the pristine oxygen production rate may be achieved within a few seconds. Depending on the type and amount of the basic compound the oxygen production can be accelerated to a greater or lesser extent.

An exemplary method for decelerating or stopping the oxygen production of an oxygen generator comprises providing an oxygen source, providing an ionic liquid (neutral or basic), providing a metal oxide compound, generating oxygen by contacting the oxygen source, the ionic liquid and the metal oxide compound, and decelerating or stopping the oxygen production by adding an acidic compound to the oxygen source, the ionic liquid and the metal oxide compound.

A further exemplary method for decelerating or stopping the oxygen production of an oxygen generator comprises providing an oxygen source, providing an acidic ionic liquid, providing a metal oxide compound, providing a basic compound, generating oxygen by contacting the oxygen source, the ionic liquid, the metal oxide compound and the basic compound, and decelerating or stopping the oxygen production by adding a further acidic compound to the oxygen source, the ionic liquid, the metal oxide compound and the basic compound.

Oxygen production interruption and restart of the oxygen production can be performed multiple times over the course of the decomposition reaction. Thus, it is possible to adapt the oxygen production rate to the particular needs. In situations where a user needs more oxygen, he may increase the oxygen flow rate, and in situations where he needs less oxygen he may save oxygen by decreasing or even interrupting the oxygen production. The inventive method for controlling the oxygen production rate of an oxygen generator supplies oxygen in a manner similar to a liquid oxygen supply system or a pressurized oxygen tank.

It goes without saying that in the above methods the acidic compound and the basic compound are not added simultaneously, but rather at the respective time when stop or decrease of oxygen production, or restart or increase of oxygen production, respectively, are desired.

The oxygen source, the ionic liquid, the metal oxide compound, the acidic compound and the basic compound are as described above.

In an exemplary method, the oxygen production is accelerated or restarted after a desired time interval by adding a basic compound or a further basic compound to the oxygen source, the ionic liquid, and the catalyst.

According to further exemplary methods, acceleration and/or deceleration of the oxygen production is performed stepwise by adding several portions of a basic compound or a further basic compound or an acidic compound or a further acidic compound, respectively, with time intervals between the individual addition steps.

In another exemplary method, the process of decelerating or interrupting the oxygen production and the process of accelerating or restarting the oxygen production are performed several times.

Many compositions for generating oxygen do not produce constant oxygen flow rates, but rather show increasing or decreasing oxygen flow rates. In other oxygen generating compositions, oxygen flow rates fluctuate during the peroxide decomposition reaction. Fluctuating or increasing or decreasing oxygen flow rates, however, are undesirable. The present invention offers a possibility to influence the decomposition reaction, i.e. to accelerate the reaction when the oxygen flow rate decreases, and to decelerate the reaction when the oxygen flow rate increases, thus rendering the oxygen flow rate constant over the course of time.

In the context of this invention, a liquid is regarded neutral, if its pH is in a range from 6.5 to 7.3 (because they contain an ionic liquid having a pH in this range intrinsically, or because they contain an ionic liquid having a pH in a different range, but the pH has been adjusted by adding an acidic or a basic compound, respectively).

In the context of this invention, a liquid is regarded acidic, if its pH is in a range below 6.5. In ionic liquids having a pH below 6.5 (because they contain an ionic liquid having a pH below 6.5 intrinsically, or because they contain an ionic liquid having a different pH, but the pH has been adjusted by adding an acidic compound), the peroxide decomposition reaction proceeds slower than at a pH of 6.5 or above. The lower the pH value, the slower the decomposition reaction, and an increasingly higher amount of peroxide compound remains as an undecomposed residue. For the ability to stop oxygen production, the pKₐ-value of the acidic compound and/or the further acidic compound has been found to be important. In an embodiment of the invention the pKₐ-value of the acidic compound and/or the further acidic compound is below 5, in particular below 4.5, in particular below 4, in particular below 3.5, in particular below 3, in particular below 2.5, in particular below 2, in particular below 1.5, in particular below 1, in particular below 0.5, in particular below 0. The pKₐ-values are always given for 25°C as standard condition. The pKₐ-value is an intrinsic feature of the acidic compound and/or the further acidic compound. Usually, pKₐ-values of known acidic compounds or known further acidic compounds are known in the art. The pKₐ-values can be determined by methods well-known in the art, e.g. by means of titration.

The acidic compound and/or the further acidic compound and the amount of acidic compound and/or the further acidic compound where the peroxide decomposition does not proceed at all, depends on the types of ionic liquid, peroxide and catalyst, and can be easily found for each particular system by a few routine experiments. In an embodiment of the method of the invention the amount of the acidic compound and/or the further acidic compound is selected such that it is sufficient for completely reducing the metal in the metal oxide by at least one oxidation state, in particular by two oxidation states. Such a reduction results in a complete stop of the oxygen production. In an embodiment, the oxygen generator according to the invention comprises an amount of the acidic compound and/or the further acidic compound sufficient for completely reducing the metal in the metal oxide by at least one oxidation state, in particular by two oxidation states. This amount should also be sufficient for preventing reoxidation. This amount can be easily calculated or experimentally determined. For example, if the metal oxide is MnO₂ the metal is completely reduced when the brown color of MnO₂ disappears.

In the context of this invention, a liquid is regarded basic, if its pH is in a range above 7.3. In ionic liquids having a pH above 7.3 (because they contain an ionic liquid having a pH above 7.3 intrinsically, or because they contain an ionic liquid having a different pH, but the pH has been adjusted by adding a basic compound), the peroxide decomposition reaction proceeds faster than at a pH of 7.3 or below. The higher the pH value, the faster the peroxide is decomposed, i.e. the shorter the time period needed for complete decomposition of the peroxide. Again, reaction speeds somewhat vary depending on the types of ionic liquid, peroxide and decomposition catalyst, but a desired reaction speed for a particular system can be easily found by a few routine experiments. For the ability to start oxygen production, the pKb-value of the basic compound has been found to be important. In an embodiment of the invention the pKb-value of the basic compound and/or the further basic compound is below 10, in particular below 9.5, in particular below 9, in particular below 8.5, in particular below 8, in particular below 7.5, in particular below 7, in particular below 6.5, in particular below 6, in particular below 5.5, in particular below 5. The pKb-values are always given for 25°C as standard condition. The pKb-value is an intrinsic feature of the basic compound and/or the further basic compound. Usually, pKb-values of known basic compounds or known further basic compounds are known in the art. The pKb-values can be determined by methods well-known in the art, e.g. by means of titration.

Herein, the pH value of an ionic liquid is determined in an 100 mM aqueous solution (distilled water) of the ionic liquid at 20°C. The pH value can be adjusted as desired by adding acids or bases, respectively, e.g. 1 M HCI or 1 M NaOH.

An exemplary device for generating oxygen in a controlled manner is specifically adapted for housing the components of the composition for generating oxygen in a physically separated state, and for bringing them into physical contact once generation of oxygen is desired, and for housing at least one acidic compound and, optionally, at least one basic compound in such a manner that the acidic compound and the basic compound can be added to the composition when desired.

In another exemplary embodiment, a device for generating oxygen in a controlled manner comprises a reaction chamber housing a composition for generating oxygen, the composition comprising a combination of constituents consisting of an oxygen source, an acidic ionic liquid, and a metal oxide compound, means for allowing oxygen to exit the reaction chamber, at least one dosing device housing a basic compound and at least one dosing device housing in acidic compound, the dosing devices being adapted to introduce the basic compound and the acidic compound into the reaction chamber.

In a further exemplary embodiment, a device for generating oxygen in a controlled manner comprises a reaction chamber housing a composition for generating oxygen, the composition comprising a combination of constituents consisting of an oxygen source, a neutral or basic ionic liquid, and a metal oxide compound, at least one dosing device housing an acidic compound and, optionally, at least one dosing device housing a basic compound, the dosing device(s) being adapted to introduce the acidic compound and/or the basic compound into the reaction chamber, means for maintaining at least one of the oxygen source, the ionic liquid and the metal oxide compound and/or the metal salt physically separated from the remaining constituents, means for establishing physical contact of the oxygen source, the ionic liquid and the metal oxide compound, and means for allowing oxygen to exit the reaction chamber.

The oxygen source, the ionic liquid, the metal oxide compound, the acidic compound and the basic compound are as described above.

Devices for housing the components of the composition for generating oxygen in a physically separated state and for bringing them into physical contact once generation of oxygen is desired, are described in EP 3 323 782 A1, in particular in paragraphs [0053] to [0057] and [0106] to [0127], and are illustrated in Figs. 18 to 22 of EP 3 323 782 A1.

A device for generating oxygen according to the present invention may be designed, for example, as illustrated in figures 19 and 20 of EP 3 323 782 A1, however, in the device of present invention, reaction chamber 2 or compartment 4, respectively, would be filled with an oxygen source, and acidic ionic liquid, and a metal oxide compound, and injection device 21, or compartment 3, respectively, would be filled with a basic compound.

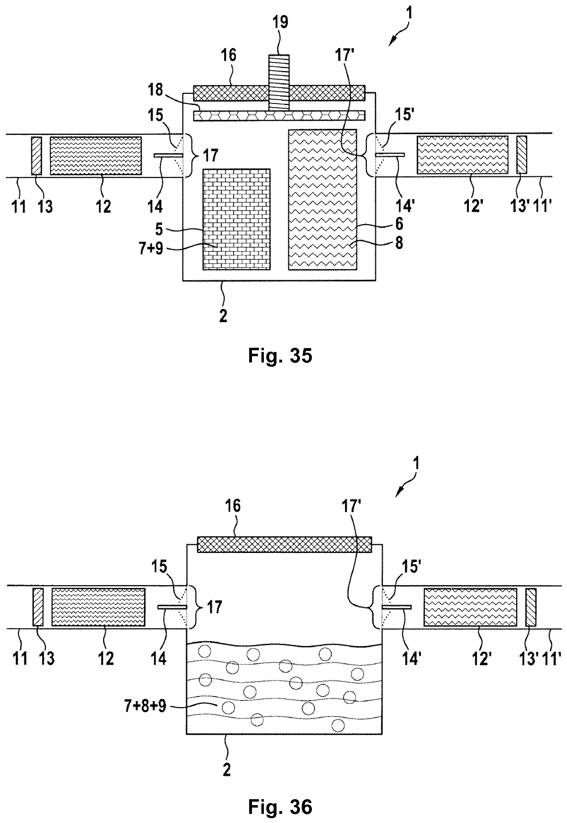

In order to be suitable as a device for generating oxygen in a controlled manner according to the present invention, the devices disclosed in EP 3 323 782 A1 must be modified by including dosing devices for housing acidic compounds and (further) basic compounds, the dosing devices being adapted to introduce the acidic compounds and/or the basic compounds into the reaction chamber. Exemplary devices are described with reference to figures 35 and 36 below.

In exemplary embodiments the ionic liquids described above are used as dispersants or solvents and as heat sinks in the oxygen generator described above.

The disclosed generators, methods and devices may take advantage of any of the materials describe above in relation to compositions and vice versa.

All references herein to "comprising" should be understood to encompass "including" and "containing" as well as "consisting of" and "consisting essentially of".

The term "a" means "at least one".

The invention will be further illustrated by the following non-limiting examples with reference to the accompanying drawings wherein:
Figures 1-14 are graphs illustrating decomposition of UHP (urea hydrogen peroxide), catalyzed by suspended or dissolved catalysts and termination of the decomposition reactions by addition of different amounts of acid solutions,
Figure 15 is a graph summarizing data deducted from the results given in Figs. 1 to 14 showing the amount of acid required for stopping reaction in dependence from strength of the acid,
Figures 16 to 21 are graphs illustrating decomposition of UHP catalyzed by different amounts of dissolved catalyst and termination of the decomposition reactions by adding acidic solutions,
Figures 22 to 27 are graphs illustrating decomposition of UHP, catalyzed by dissolved catalyst in different amounts of ionic liquid and termination of the decomposition reactions by addition of acid solutions,
Figures 28 to 33 are graphs illustrating decomposition of different amounts of UHP, catalyzed by dissolved catalyst and termination of the decomposition reactions by addition of acid solutions,
Fig. 34 is a graph summarizing data deducted from further experiments for determination of the amount of acid required for stopping decomposition of UHP, catalyzed by dissolved catalyst in dependence of the strength of the acid,
Figure 35 is a sectional view of an embodiment of a device for generating oxygen according to this invention, and
Figure 36 is a sectional view of another embodiment of a device for generating oxygen according to this invention.

In all graphs illustrating oxygen release, oxygen flow rate and volume are plotted against runtime, wherein runtime is the time which starts running at the time point of contacting the oxygen source, the ionic liquid and the catalyst. "Volume" is the oxygen volume released in total. Oxygen flow rate (I/h) and volume released (I) by each decomposition reaction where measured with a drum gas meter in each of the experiments.

### Example 1

In example 1 different acids or solutions of different acids were added to oxygen generating compositions during oxygen generation by decomposition of peroxide for evaluating which acids can stop the reaction and which amount of these acids is required for stopping the reaction. In general, 100 g urea hydrogen peroxide (UHP), 40 g of ionic liquid [EMIM][EtSO₄] and 3 mol% MnO₂ with respect to the amount of UHP were mixed to start oxygen generation. After 1/3 of the reaction time a solution of an acid in 10 g [EMIM][EtSO₄] was added to the reaction mixture. The kind of acid and the amount of acid were varied in these experiments. Volume of the oxygen produced in the reactions and the oxygen generation rate were measured by means of the gas meter.

Since the oxygen generating mixture needed some time to equilibrate after addition of the acidic compound stopping of the reaction was assessed only 30 minutes after addition of the acidic compound. The reaction was considered as stopped when less than 1 g UHP (corresponds to 130 ml oxygen) were degraded within 100 minutes beginning 30 minutes after addition of the acidic compound. The ionic liquid (IL) [EMIM][EtSO₄] had been selected because pKₐ-values of the anion and cation are such that they do not influence the oxygen generating reaction and do not interfere with the added acids.

Types and amounts of compounds are given in below tables.

**Table 1**

| **Experiment** | **Catalyst (Mass)** | **Peroxide (Mass)** | **IL (Mass)** | **Acid (Mass)** | **n(Acid)/n (IL)** | **n(Acid)/n(M nO₂)** |
|---|---|---|---|---|---|---|
| **1** | MnO₂ (2773 mg) | UHP (100 g) | [EMIM][EtSO₄] (40 g) | Chloracetic acid (none) | 0 | 0 |
| **2** | MnO₂ (2773 mg) | UHP (100 g) | [EMIM][EtSO₄] (40 g) | Chloracetic acid (4.52 g) | 0.23 | 1.5 |
| **3** | MnO₂ (2773 mg) | UHP (100 g) | [EMIM][EtSO₄] (40 g) | Chloracetic acid (6.03 g) | 0.30 | 2.0 |
| **4** | MnO₂ (2773 mg) | UHP (100 g) | [EMIM][EtSO₄] (40 g) | Chloracetic acid (7.54 g) | 0.38 | 2.5 |

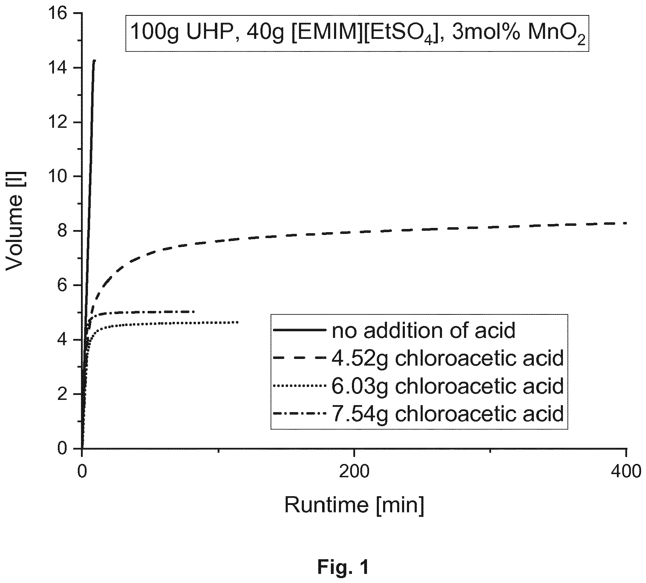

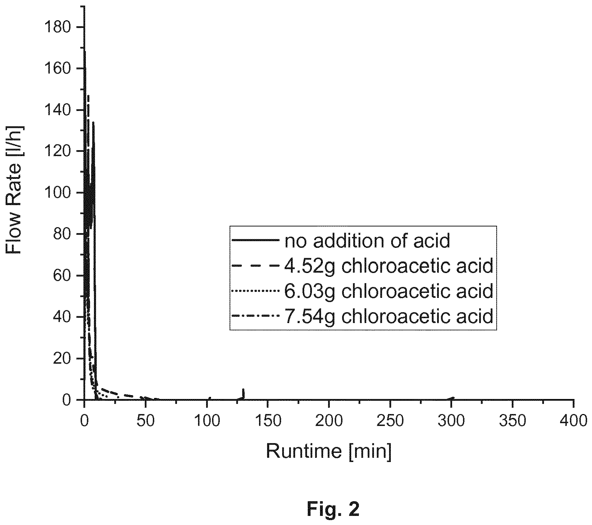

Results are shown in Figs. 1 and 2.

**Table 2**

| **Experiment** | **Catalyst (Mass)** | **Peroxide (Mass)** | **IL (Mass)** | **Acid (Mass)** | **n(Acid)/n(l L)** | **n(Acid)/n( MnO₂)** |
|---|---|---|---|---|---|---|
| **5** | MnO₂ (2773 mg) | UHP (100 g) | [EMIM][EtSO₄] (40 g) | Tartaric acid (none) | 0 | 0 |
| **6** | MnO₂ (2773 mg) | UHP (100 g) | [EMIM][EtSO₄] (40 g) | Tartaric acid (9.57 g) | 0.25 | 2.0 |

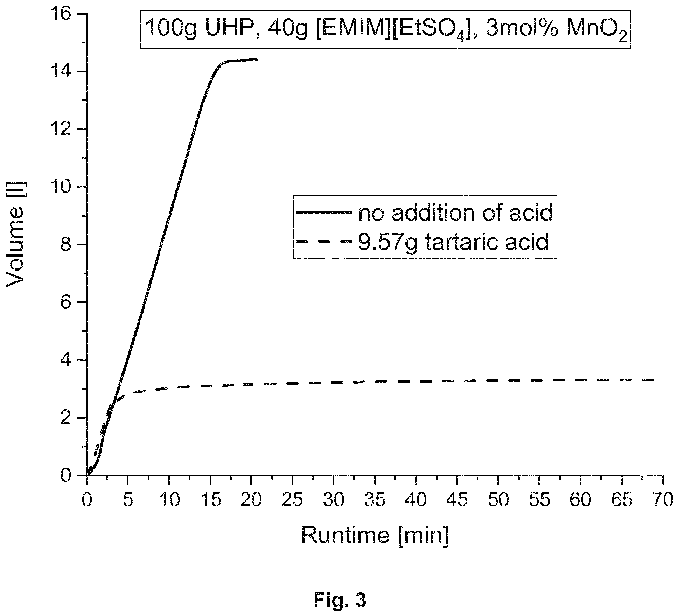

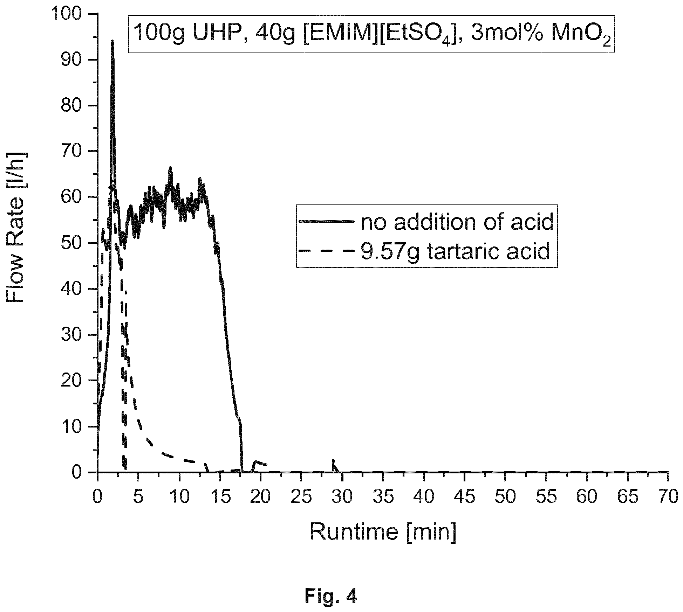

Results are shown in Figs. 3 and 4.

**Table 3**

| **Experiment** | **Catalyst (Mass)** | **Peroxide (Mass)** | **IL (Mass)** | **Acid (Mass)** | **n(Acid)/n (IL)** | **n(Acid)/n(M nO₂)** |
|---|---|---|---|---|---|---|
| **7** | MnO₂ (2773 mg) | UHP (100 g) | [EMIM][EtSO₄] (40 g) | Lactic acid (85 wt%) (none) | 0 | 0 |
| **8** | MnO₂ (2773 mg) | UHP (100 g) | [EMIM][EtSO₄] (40 g) | Lactic acid (85 wt%) (6.76 g) | 0.30 | 2.0 |
| **9** | MnO₂ (2773 mg) | UHP (100 g) | [EMIM][EtSO₄] (40 g) | Lactic acid (85 wt%) (8.45 g) | 0.38 | 2.5 |
| **10** | MnO₂ (2773 mg) | UHP (100 g) | [EMIM][EtSO₄] (40 g) | Lactic acid (85 wt%) (10.14 g) | 0.45 | 3.0 |

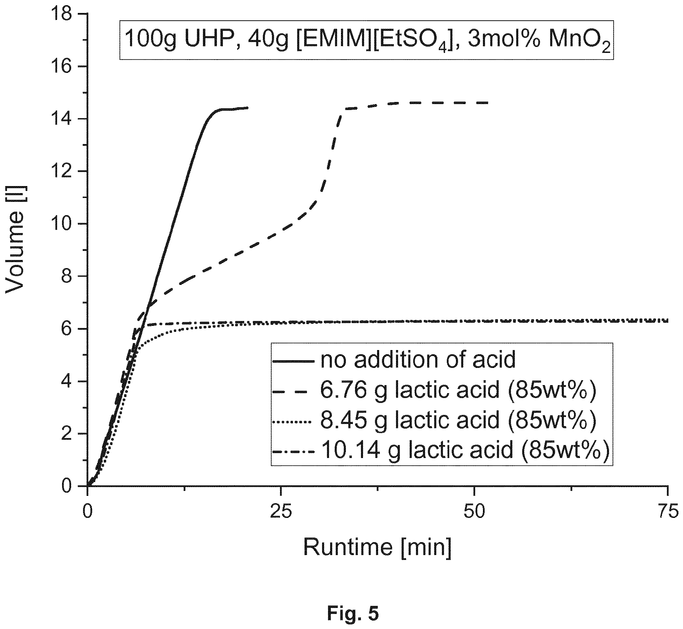

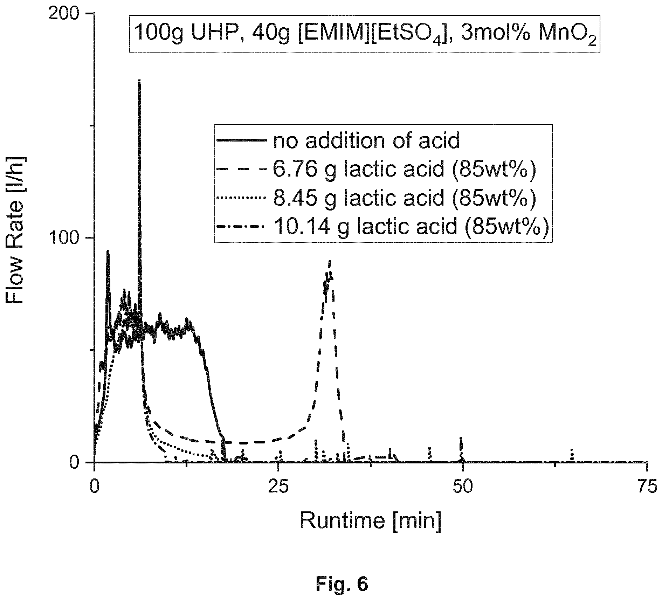

Results are shown in Figs. 5 and 6.

**Table 4**

| **Experiment** | **Catalyst (Mass)** | **Peroxide (Mass)** | **IL (Mass)** | **Acid (Mass)** | **n(Acid)/n(IL)** | **n(Acid)/n(Mn O₂)** |
|---|---|---|---|---|---|---|
| **11** | MnO₂ (2773 mg) | UHP (100 g) | [EMIM][EtS O₄] (40 g) | Benzoic acid (none) | 0 | 0 |
| **12** | MnO₂ (2773 mg) | UHP (100 g) | [EMIM][EtS O₄] (40 g) | Benzoic acid (7.79 g) | 0.27 | 2.0 |
| **13** | MnO₂ (2773 mg) | UHP (100 g) | [EMIM][EtS O₄] (40 g) | Benzoic acid (11.69 g) | 0.38 | 3.0 |
| **14** | MnO₂ (2773 mg) | UHP (100 g) | [EMIM][EtS O₄] (40 g) | Benzoic acid (13.64 g) | 0.41 | 3.5 |

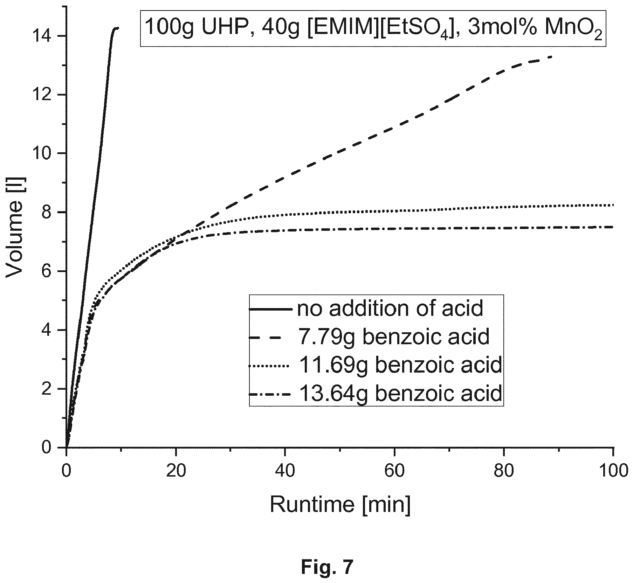

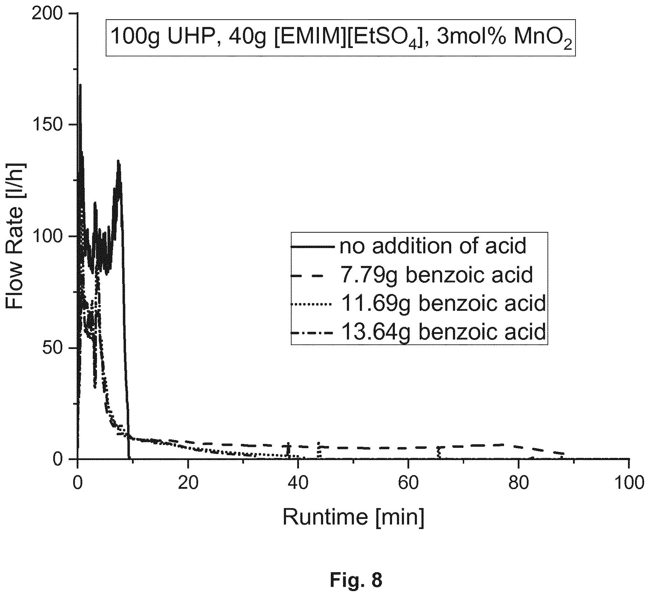

Results are shown in Figs. 7 and 8.

**Table 5**

| **Experiment** | **Catalyst (Mass)** | **Peroxide (Mass)** | **IL (Mass)** | **Acid (Mass)** | **n(Acid)/n(IL)** | **n(Acid)/n(MnO₂)** |
|---|---|---|---|---|---|---|
| **15** | MnO₂ (2773 mg) | UHP (100 g) | [EMIM][EtSO₄] (40 g) | Crotonic acid (none) | 0 | 0 |
| **16** | MnO₂ (2773 mg) | UHP (100 g) | [EMIM][EtSO₄] (40 g) | Crotonic acid (2.75 g) | 0.15 | 1.0 |
| **17** | MnO₂ (2773 mg) | UHP (100 g) | [EMIM][EtSO₄] (40 g) | Crotonic acid (5.5 g) | 0.30 | 2.0 |
| **18** | MnO₂ (2773 mg) | UHP (100 g) | [EMIM][EtSO₄] (40 g) | Crotonic acid (11 g) | 0.55 | 4.0 |
| **19** | MnO₂ (2773 mg) | UHP (100 g) | [EMIM][EtSO₄] (40 g) | Crotonic acid (16.5 g) | 0.70 | 6.0 |

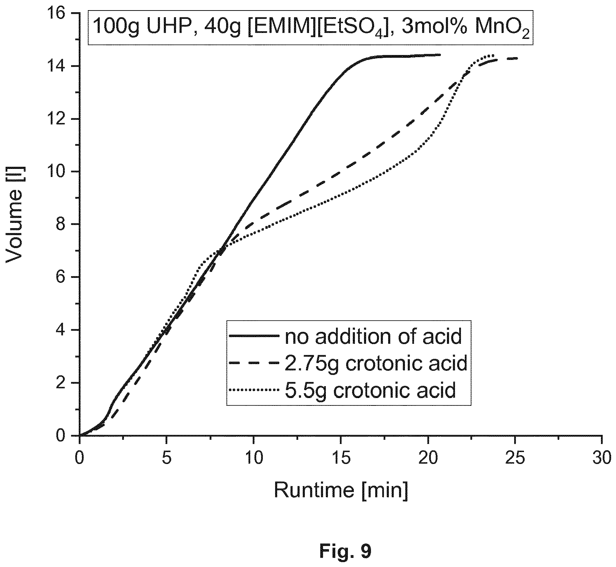

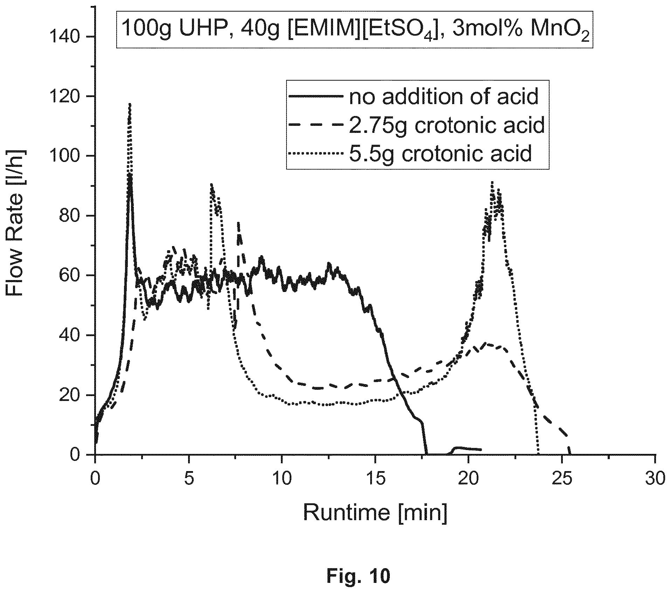

Results are shown in Figs. 9 and 10.

**Table 6**

| **Experiment** | **Catalyst (Mass)** | **Peroxide (Mass)** | **IL (Mass)** | **Acid (Mass)** | **n(Acid)/n(l L)** | **n(Acid)/n(M nO₂)** |
|---|---|---|---|---|---|---|
| **20** | MnO₂ (2773 mg) | UHP (100 g) | [EMIM][EtSO₄] (40 g) | Acetic acid (none) | 0 | 0 |
| **21** | MnO₂ (2773 mg) | UHP (100 g) | [EMIM][EtSO₄] (40 g) | Acetic acid (5.74 g) | 0.45 | 3.0 |
| **22** | MnO₂ (2773 mg) | UHP (100 g) | [EMIM][EtSO₄] (40 g) | Acetic acid (9.57 g) | 0.75 | 5.0 |
| **23** | MnO₂ (2773 mg) | UHP (100 g) | [EMIM][EtSO₄] (40 g) | Acetic acid (14.36 g) | 1.13 | 7.5 |

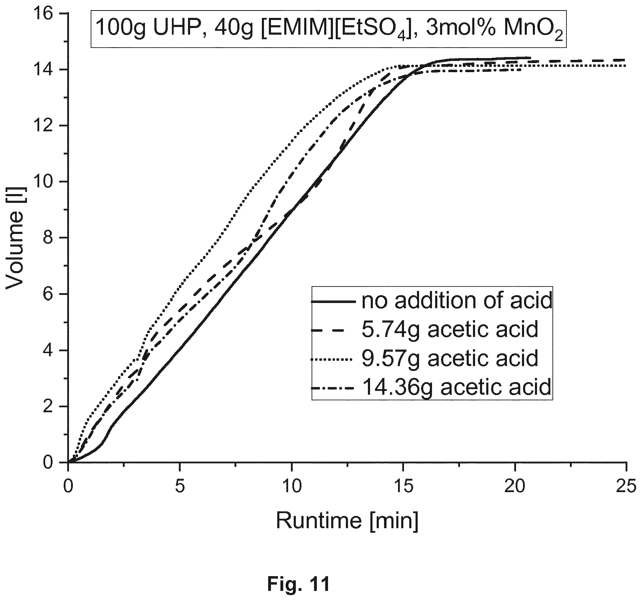

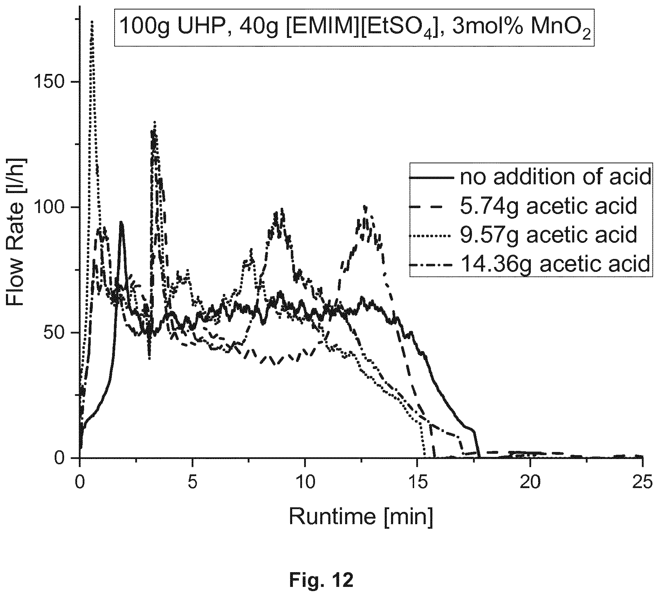

Results are shown in Figs. 11 and 12.

**Table 7**

| **Experiment** | **Catalyst (Mass)** | **Peroxide (Mass)** | **IL (Mass)** | **Acid (Mass)** | **n(Acid)/n(l L)** | **n(Acid)/n(M nO₂)** |
|---|---|---|---|---|---|---|
| **24** | MnO₂ (2773 mg) | UHP (100 g) | [EMIM][EtSO₄] (40 g) | Valeric acid (none) | 0 | 0 |
| **25** | MnO₂ (2773 mg) | UHP (100 g) | [EMIM][EtSO₄] (40 g) | Valeric acid (3.4 g) | 0.16 | 1.0 |
| **26** | MnO₂ (2773 mg) | UHP (100 g) | [EMIM][EtSO₄] (40 g) | Valeric acid (6.8 g) | 0.31 | 2.1 |
| **27** | MnO₂ (2773 mg) | UHP (100 g) | [EMIM][EtSO₄] (40 g) | Valeric acid (19.5 g) | 0.90 | 6.0 |

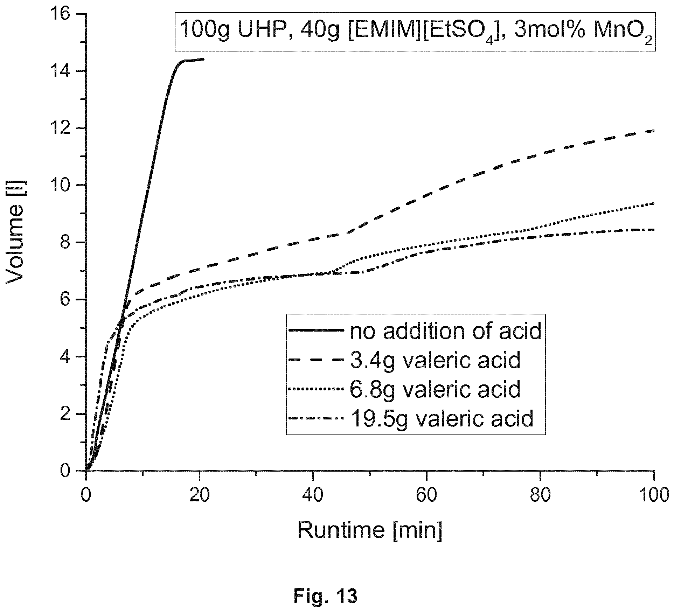

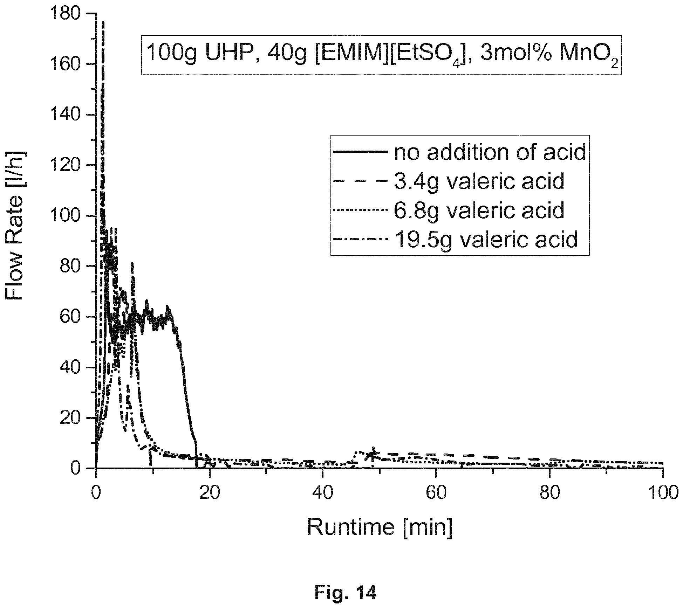

Results are shown in Figs. 13 and 14.

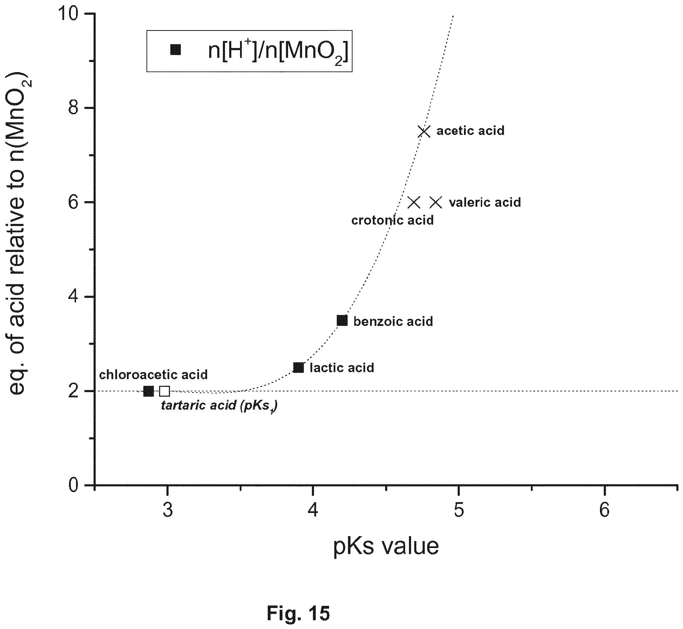

From results of experiments 1 to 27 a relation between the strength of the added acidic compound and the amount of acidic compound required for stopping oxygen generation by peroxide decomposition according to the above definition can be seen. The stronger the acidic compound, i.e. the lower the pKₐ-value, the smaller is the amount of the acidic compound to stop the reaction. For complete stopping of the reaction always two protons per molecule MnO₂ are required. Acids having a pKₐ-value above 4.5 or above 5 are only able to decelerate oxygen production but not to stop the production. These results are summarized in Fig. 15.

Fig. 15 shows as a function of the strength of the acid how many equivalents of an acid in relation to MnO₂ are required for completely stopping peroxide decomposition. "pkₐ" is designated as "pks" in Fig. 15. Filled squares symbolize complete stopping of the peroxide decomposition. The empty square given for tartaric acid refers to a complete stop of peroxide decomposition, wherein the amount of acid is given for the first pKₐ-value of the diprotic acid. Crosses indicate that the amount of the added acid did not result in a stop of the reaction. The horizontal dotted line indicates the lower limit for the amount of added acid for stopping peroxide decomposition. The dotted curve is a calculated curve fitted to the calculated values.

### Example 2

For examining the influence of catalyst concentration generally 100 g UHP in 40 g [EMIM][EtSO₄] were mixed with 1.5, 3 or 6 mol% MnO₂. After 1/3 of the reaction time a solution of lactic acid in 10 g [EMIM][EtSO₄] was added to the reaction mixture. The amount sufficient for a complete stop of the reaction was determined by varying the amount of acid. Types and amounts of compounds of the compositions are given in below tables.

**Table 8**

| **Experiment** | **Catalyst (Mass)** | **Peroxide (Mass)** | **IL (Mass)** | **Acid (Mass)** | **n(Acid)/n(l L)** | **n(Acid)/n(M nO₂)** |
|---|---|---|---|---|---|---|
| **28** | MnO₂ (1386 mg) | UHP (100 g) | [EMIM][EtSO₄] (40 g) | Lactic acid (85 wt%) (none) | 0 | 0 |
| **29** | MnO₂ (1386 mg) | UHP (100 g) | [EMIM][EtSO₄] (40 g) | Lactic acid (85 wt%) (3.38 g) | 0.15 | 2.0 |
| **30** | MnO₂ (1386 mg) | UHP (100 g) | [EMIM][EtSO₄] (40 g) | Lactic acid (85 wt%) (4.23 g) | 0.19 | 2.5 |
| **31** | MnO₂ (1386 mg) | UHP (100 g) | [EMIM][EtSO₄] (40 g) | Lactic acid (85 wt%) (5.07 g) | 0.23 | 3.0 |

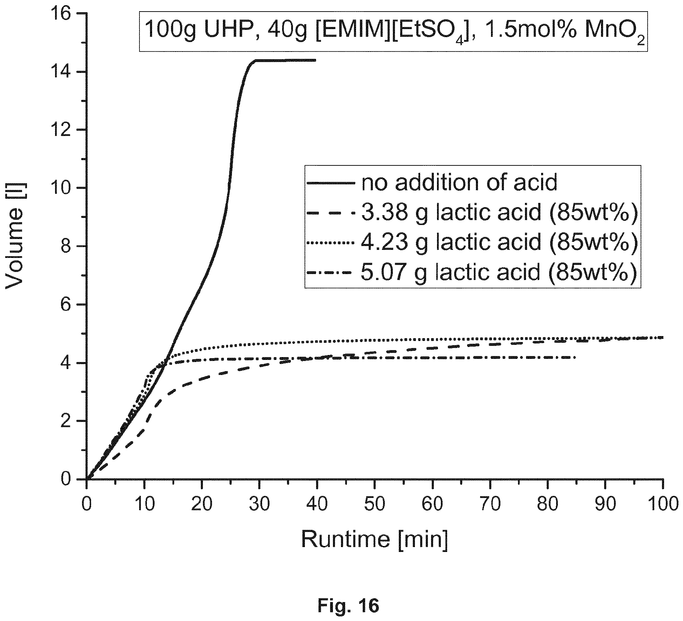

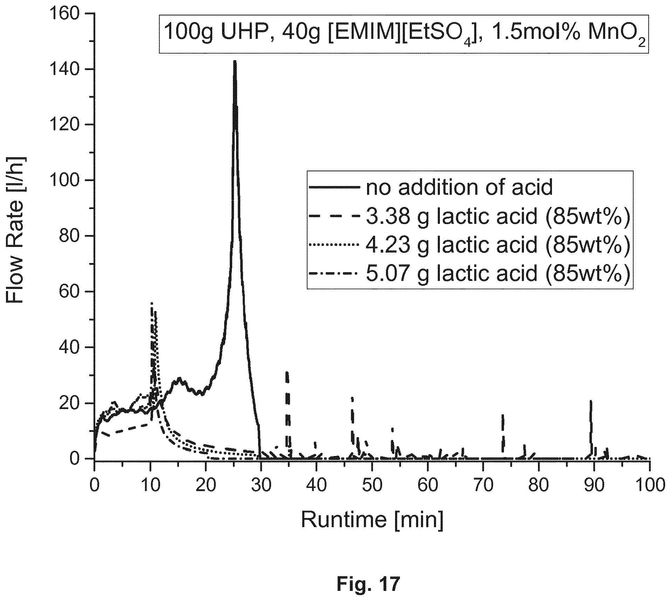

Results are shown in Figs. 16 and 17.

**Table 9**

| **Experiment** | **Catalyst (Mass)** | **Peroxide (Mass)** | **IL (Mass)** | **Acid (Mass)** | **n(Acid)/n(l L)** | **n(Acid)/n(M nO₂)** |
|---|---|---|---|---|---|---|
| **32** | MnO₂ (2773 mg) | UHP (100 g) | [EMIM][EtSO₄] (40 g) | Lactic acid (85 wt%) (none) | 0 | 0 |
| **33** | MnO₂ (2773 mg) | UHP (100 g) | [EMIM][EtSO₄] (40 g) | Lactic acid (85 wt%) (6.76 g) | 0.30 | 2.0 |
| **34** | MnO₂ (2773 mg) | UHP (100 g) | [EMIM][EtSO₄] (40 g) | Lactic acid (85 wt%) (8.45 g) | 0.38 | 2.5 |
| **35** | MnO₂ (2773 mg) | UHP (100 g) | [EMIM][EtSO₄] (40 g) | Lactic acid (85 wt%) (10.14 g) | 0.45 | 3.0 |

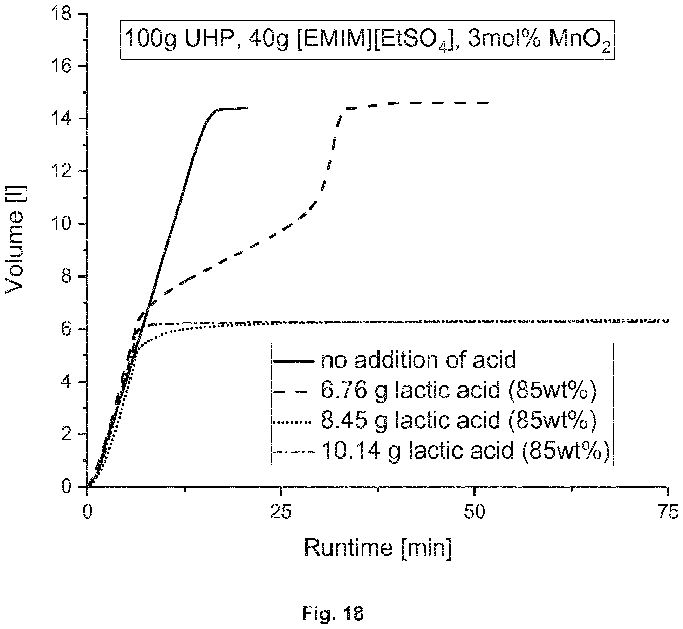

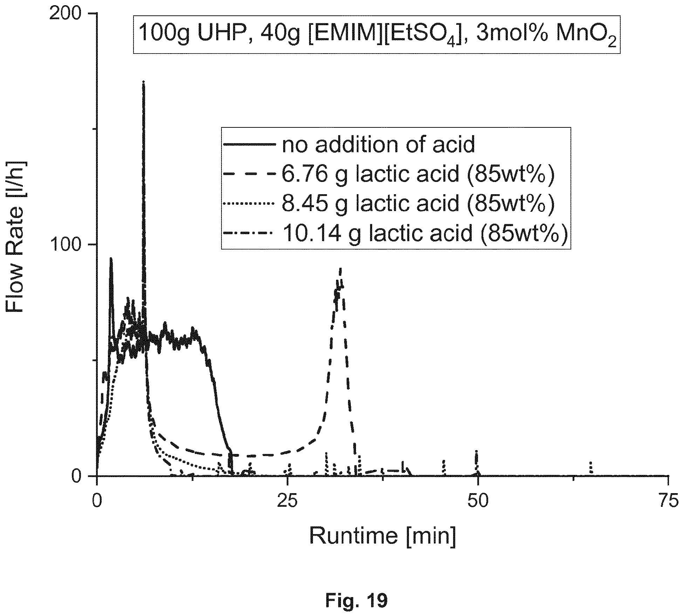

Results are shown in Figs. 18 and 19.

**Table 10**

| **Experiment** | **Catalyst (Mass)** | **Peroxide (Mass)** | **IL (Mass)** | **Acid (Mass)** | **n(Acid)/n(l L)** | **n(Acid)/n(M nO₂)** |
|---|---|---|---|---|---|---|
| **36** | MnO₂ (5545 mg) | UHP (100 g) | [EMIM][EtSO₄] (40 g) | Lactic acid (85 wt%) (none) | 0 | 0 |
| **37** | MnO₂ (5545 mg) | UHP (100 g) | [EMIM][EtSO₄] (40 g) | Lactic acid (85 wt%) (13.52 g) | 0.60 | 2.0 |
| **38** | MnO₂ (5545 mg) | UHP (100 g) | [EMIM][EtSO₄] (40 g) | Lactic acid (85 wt%) (20.28 g) | 0.90 | 3.0 |

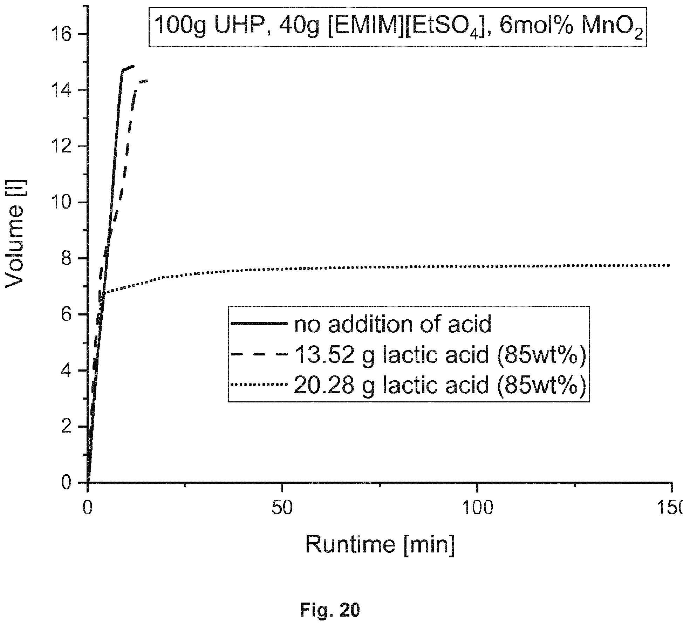

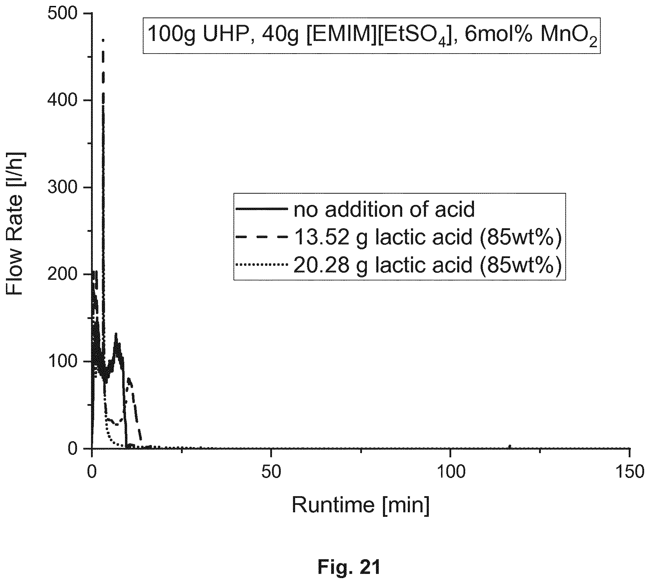

Results are shown in Figs. 20 and 21.

Experiments 30, 31, 34, 35 and 38 resulted in a complete stop of the oxygen generating reaction.

The experiments show that the amount of acid required for stopping the reaction is in a linear relation to the amount of used catalyst.

### Example 3

For determining whether the principles found depend on the amount of ionic liquid in the oxygen generating composition 100 g UHP in 20 g, 40 g or 80 g [EMIM][EtSO₄] were mixed with 3 mol% MnO₂ with respect to the amount of UHP. After 1/3 of the reaction time a solution of lactic acid in 10 g [EMIM][EtSO₄] was added to the oxygen generating composition. The amount of lactic acid required for a complete stop of the reaction was determined by varying the amount of lactic acid.

The different oxygen generating compositions are given in below tables 11 to 13.

**Table 11**

| **Experiment** | **Catalyst (Mass)** | **Peroxide (Mass)** | **IL (Mass)** | **Acid (Mass)** | **n(Acid)/n( IL)** | **n(Acid)/n(M nO₂)** |
|---|---|---|---|---|---|---|
| **39** | MnO₂ (2773 mg) | UHP (100 g) | [EMIM][EtSO₄ ] (20 g) | Lactic acid (85 wt%) (none) | 0 | 0 |
| **40** | MnO₂ (2773 mg) | UHP (100 g) | [EMIM][EtSO₄ ] (20 g) | Lactic acid (85 wt%) (6.76 g) | 0.50 | 2.0 |
| **41** | MnO₂ (2773 mg) | UHP (100 g) | [EMIM][EtSO₄ ] (20 g) | Lactic acid (85 wt%) (10.14 g) | 0.75 | 3.0 |

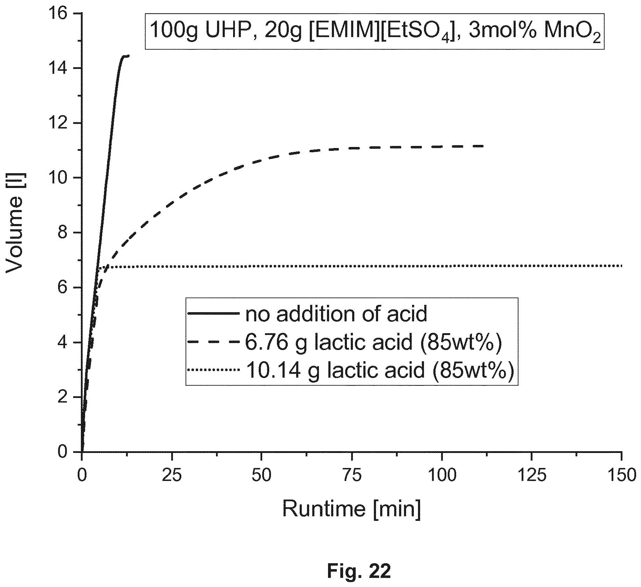

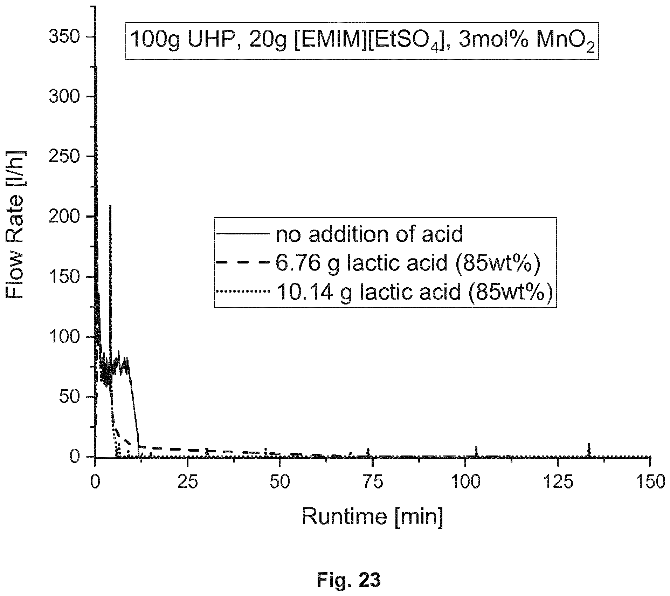

Results are shown in Figs. 22 and 23.

**Table 12**

| **Experiment** | **Catalyst (Mass)** | **Peroxide (Mass)** | **IL (Mass)** | **Acid (Mass)** | **n(Acid)/n(l L)** | **n(Acid)/n(M nO₂)** |
|---|---|---|---|---|---|---|
| **42** | MnO₂ (2773 mg) | UHP (100 g) | [EMIM][EtSO₄] (40 g) | Lactic acid (85 wt%) (none) | 0 | 0 |
| **43** | MnO₂ (2773 mg) | UHP (100 g) | [EMIM][EtSO₄] (40 g) | Lactic acid (85 wt%) (6.76 g) | 0.30 | 2.0 |
| **44** | MnO₂ (2773 mg) | UHP (100 g) | [EMIM][EtSO₄] (40 g) | Lactic acid (85 wt%) (8.45 g) | 0.38 | 2.5 |
| **45** | MnO₂ (2773 mg) | UHP (100 g) | [EMIM][EtSO₄] (40 g) | Lactic acid (85 wt%) (10.14 g) | 0.45 | 3.0 |

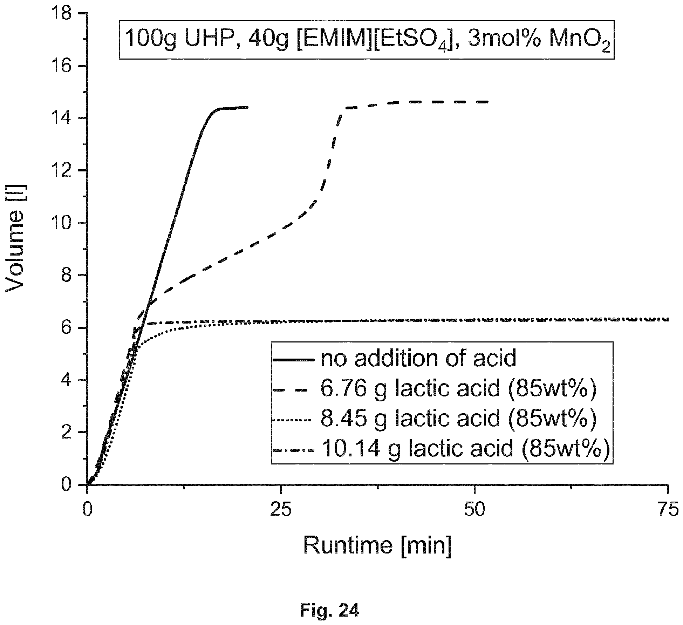

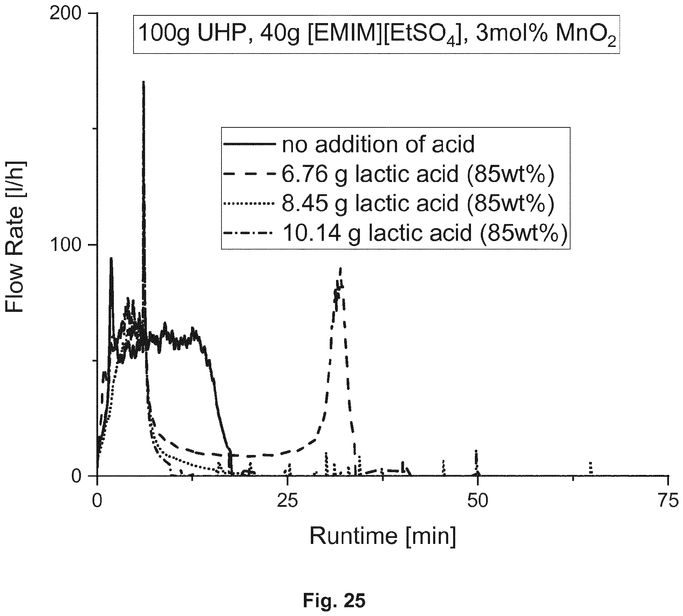

Results are shown in Figs. 24 and 25.

**Table 13**

| **Experiment** | **Catalyst (Mass)** | **Peroxide (Mass)** | **IL (Mass)** | **Acid (Mass)** | **n(Acid)/n(l L)** | **n(Acid)/n(M nO₂)** |
|---|---|---|---|---|---|---|
| **46** | MnO₂ (2773 mg) | UHP (100 g) | [EMIM][EtSO₄] (80 g) | Lactic acid (85 wt%) (none) | 0 | 0 |
| **47** | MnO₂ (2773 mg) | UHP (100 g) | [EMIM][EtSO₄] (80 g) | Lactic acid (85 wt%) (6.76 g) | 0.17 | 2.0 |
| **48** | MnO₂ (2773 mg) | UHP (100 g) | [EMIM][EtSO₄] (80 g) | Lactic acid (85 wt%) (10.14 g) | 0.25 | 3.0 |

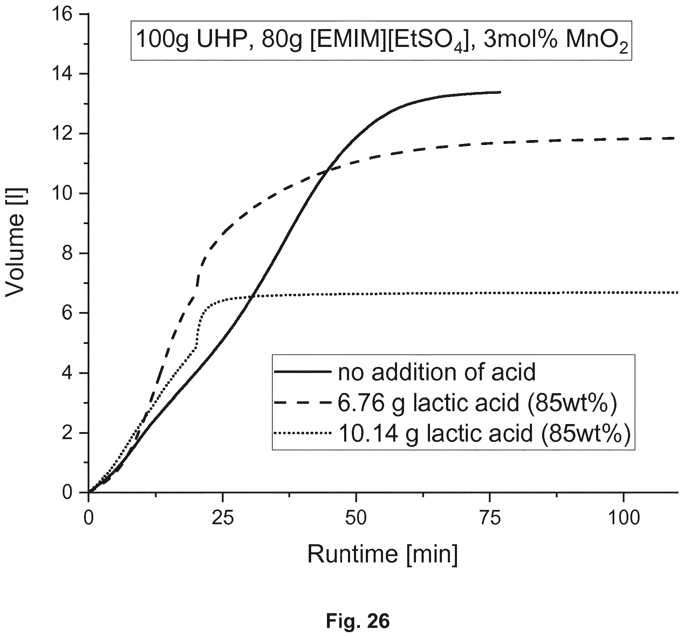

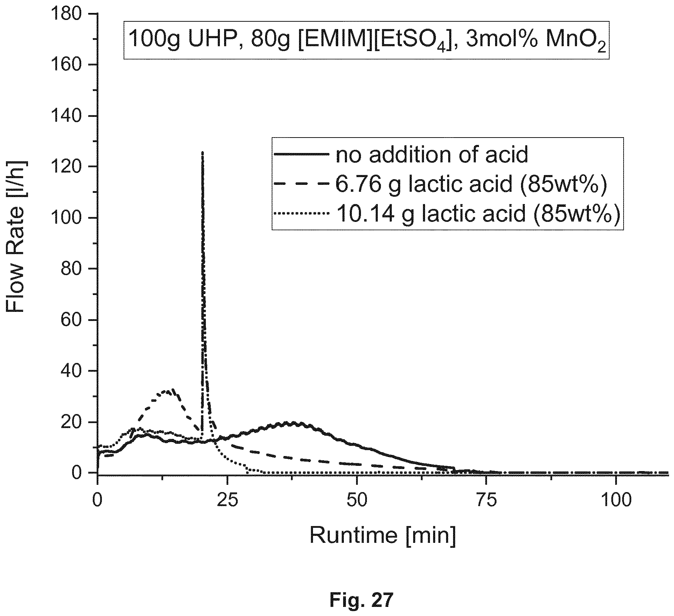

Results are shown in Figs. 26 and 27.

Experiments 41, 44, 45 and 48 resulted in a complete stop of the oxygen production. The results show that at least in a big range the amount of acid required for stopping oxygen generation is independent from the amount of ionic liquid.

### Example 4

For examining scalability 50 g, 100 g or 200 g UHP were mixed with ionic liquid and 3 mol% MnO₂. With respect to the amount of UHP the amount of ionic liquid was adapted in a linear relation to the amount of UHP. After 1/3 of the reaction time a solution of lactic acid in 10 g [EMIM][EtSO₄] was added to the reaction mixture. The amount of lactic acid required for completely stopping oxygen generation was determined by varying the amount of acid added to the oxygen generating composition.

Type and amount of compounds of the compositions used in each of the experiments are given in below tables 14 to 16.

**Table 14**

| **Experiment** | **Catalyst (Mass)** | **Peroxide (Mass)** | **IL (Mass)** | **Acid (Mass)** | **n(Acid)/n(l L)** | **n(Acid)/n(M nO₂)** |
|---|---|---|---|---|---|---|
| **49** | MnO₂ (1386 mg) | UHP (50 g) | [EMIM][EtSO₄] (20 g) | Lactic acid (85 wt%) (none) | 0 | 0 |
| **50** | MnO₂ (1386 mg) | UHP (50 g) | [EMIM][EtSO₄] (20 g) | Lactic acid (85 wt%) (3.38 g) | 0.25 | 2.0 |
| **51** | MnO₂ (1386 mg) | UHP (50 g) | [EMIM][EtSO₄] (20 g) | Lactic acid (85 wt%) (5.07 g) | 0.38 | 3.0 |

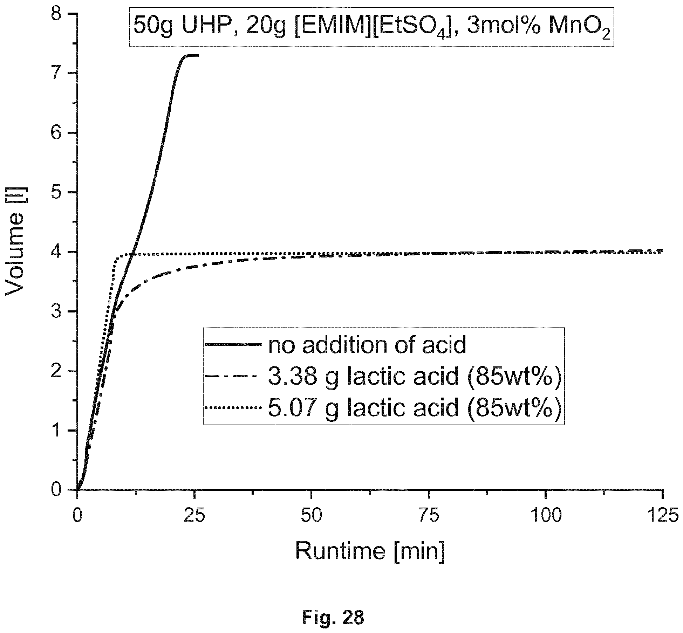

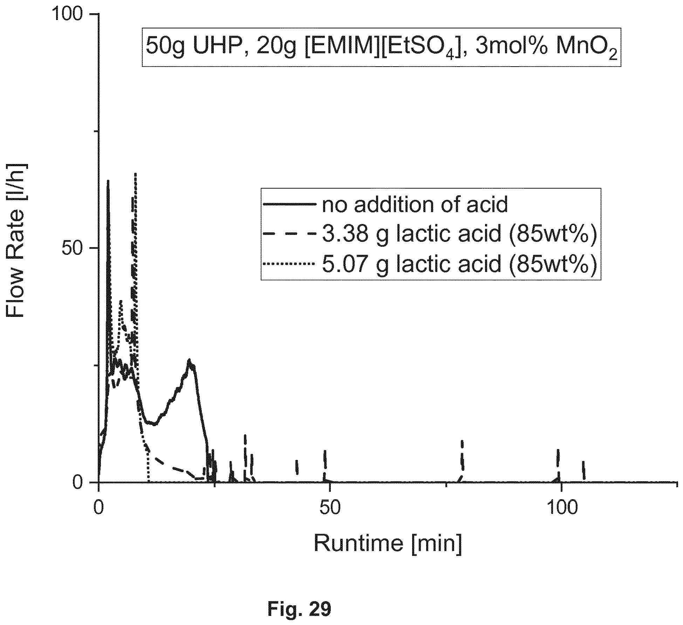

Results are shown in Figs. 28 and 29.

**Table 15**

| **Experiment** | **Catalyst (Mass)** | **Peroxide (Mass)** | **IL (Mass)** | **Acid (Mass)** | **n(Acid)/n(l L)** | **n(Acid)/n(M nO₂)** |
|---|---|---|---|---|---|---|
| **52** | MnO₂ (2773 mg) | UHP (100 g) | [EMIM][EtSO₄] (40 g) | Lactic acid (85 wt%) (none) | 0 | 0 |
| **53** | MnO₂ (2773 mg) | UHP (100 g) | [EMIM][EtSO₄] (40 g) | Lactic acid (85 wt%) (6.76 g) | 0.30 | 2.0 |
| **54** | MnO₂ (2773 mg) | UHP (100 g) | [EMIM][EtSO₄] (40 g) | Lactic acid (85 wt%) (8.45 g) | 0.38 | 2.5 |
| **55** | MnO₂ (2773 mg) | UHP (100 g) | [EMIM][EtSO₄] (40 g) | Lactic acid (85 wt%) (10.14 g) | 0.45 | 3.0 |

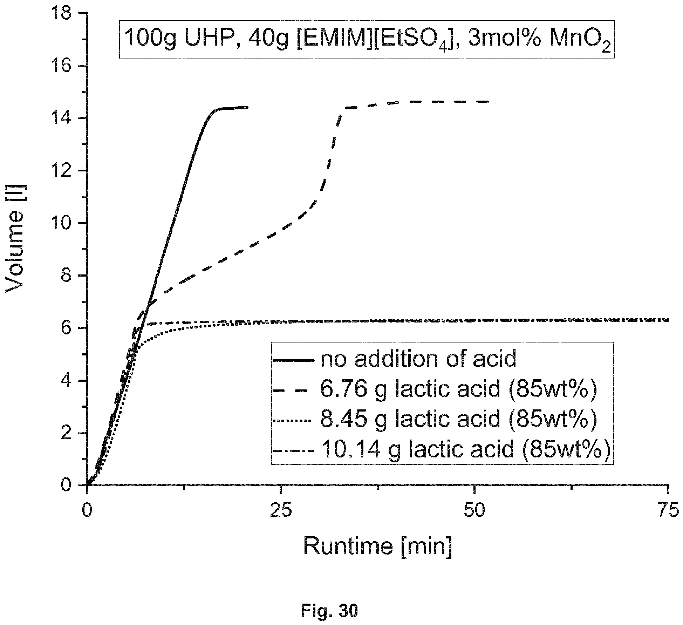

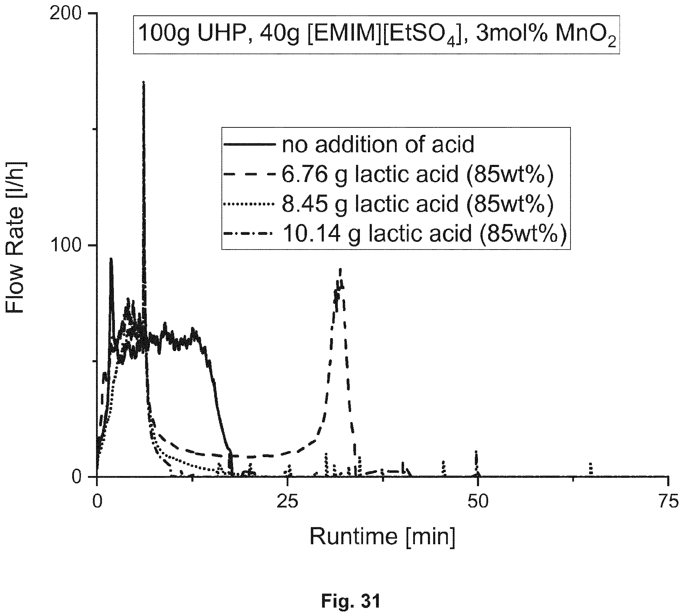

Results are shown in Figs. 30 and 31.

**Table 16**

| **Experiment** | **Catalyst (Mass)** | **Peroxide (Mass)** | **IL (Mass)** | **Acid (Mass)** | **n(Acid)n(IL)** | **n(Acid)/n(MnO₂)** |
|---|---|---|---|---|---|---|
| **56** | MnO₂ (5545 mg) | UHP (200 g) | [EMIM][EtSO₄] (80 g) | Lactic acid (85 wt%) (none) | 0 | 0 |
| **57** | MnO₂ (5545 mg) | UHP (200 g) | [EMIM][EtSO₄] (80 g) | Lactic acid (85 wt%) (13.52 g) | 0.33 | 2.0 |
| **58** | MnO₂ (5545 mg) | UHP (200 g) | [EMIM][EtSO₄] (80 g) | Lactic acid (85 wt%) (20.28 g) | 0.50 | 3.0 |

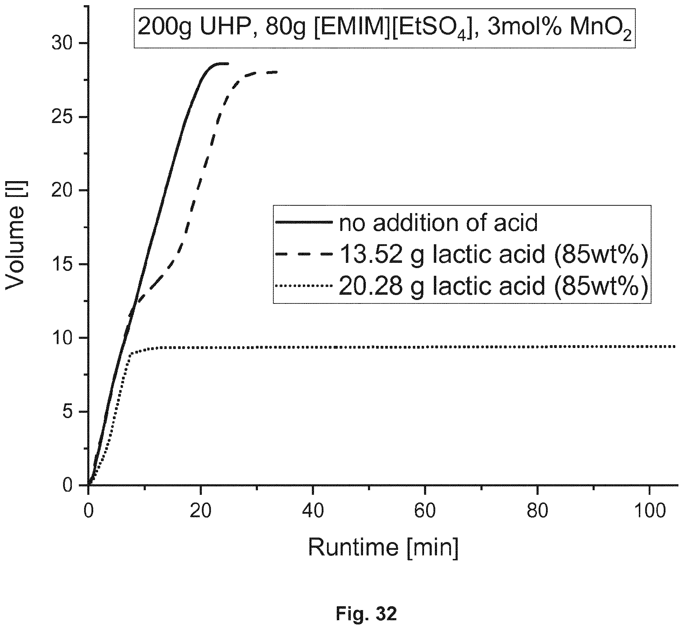

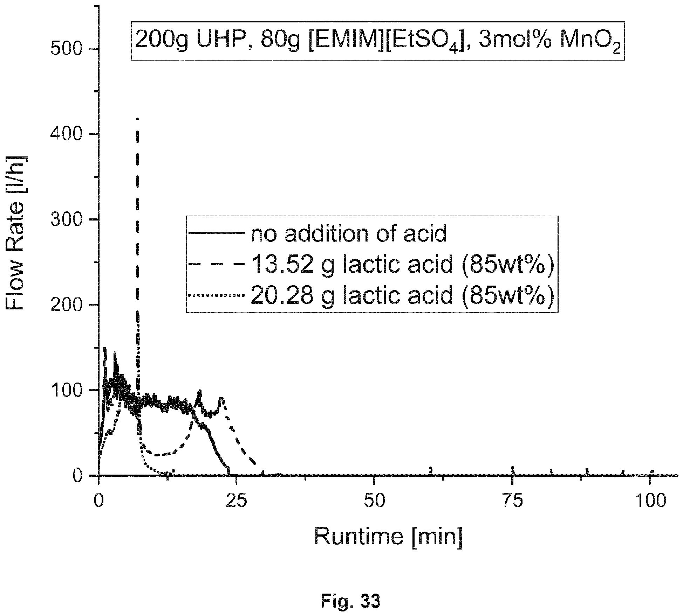

Results are shown in Figs. 32 and 33.

In experiments 51, 54, 55 and 58 oxygen production was completely stopped. Results show that the amount of acid required for a complete stop of the oxygen generating reaction is at least in a wide range independent from the scale of the reaction.

### Example 5

In example 5 influence of the strength of the acidic solution on oxygen production was determined by dissolving an acid in 25 g of ionic liquid [MMlM][PO₄Me₂] and further suspending 3 mol% MnO₂ with respect to 40 g UHP. The resulting mixture was then given to 40 g UHP in a flask for starting the oxygen generation. At the beginning this resulted in a peroxide decomposition and oxygen generation in spite of the acid present in this composition since the suspension added to UHP contained the active catalyst MnO₂. If the acid was strong enough and present in a sufficient amount the catalyst was reduced to soluble Mn(II). When the acid was acidic enough, oxidation of Mn(II) was prevented and peroxide decomposition and oxygen production were completely stopped. 3 days after start of the reaction a sodium hydroxide solution was given to the reaction mixture. In case that there was still peroxide that was not decomposed this peroxide was then decomposed and oxygen was produced. If there was peroxide 3 days after start of the reaction the reaction was considered as stopped.

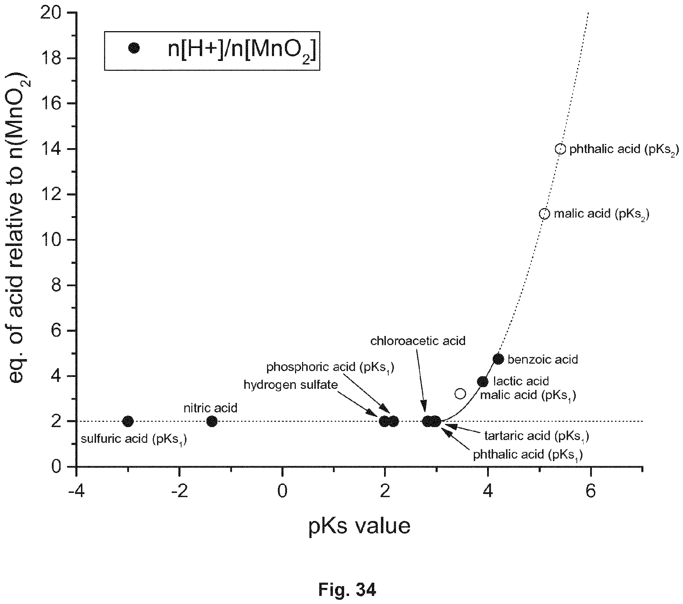

Results are summarized in Fig. 34.

Fig. 34 shows the relation between strength of the acid and the amount required for stopping peroxide decomposition. "pKₐ" is designated as "pKs" in Fig. 34. In Fig. 34 filled circles symbolize that peroxide decomposition is completely stopped by addition of the given amount of acid. Empty circles symbolize data calculated from the experimental data and a polynomial fitting function. The horizontal dotted line symbolizes the lower limit for the amount of added acid for stopping peroxide decomposition. The dotted curve symbolizes the result of a fitting function of the calculated values.

Fig. 35 illustrates an exemplary device 1 for generating oxygen in a controlled manner, the device having one single reaction chamber 2 for storing the composition for generating oxygen. In such a single reaction chamber 2 at least one of the constituents of the composition for generating oxygen can be enclosed in a receptacle in order to avoid contact with the remaining constituents of the composition contained in the reaction chamber 2. The device is particularly suitable for use with neutral and basic ionic liquids. In the embodiment shown in Fig. 35, two receptacles 5, 6 are arranged in the reaction chamber. Receptacle 5 contains an intimate mixture of the oxygen source 7 and the decomposition catalyst 9, for example in powder form or compressed into pellets, in a thoroughly dried condition. Receptacle 6 contains the ionic liquid 8. Alternatively, there may be only one receptacle for enclosing the peroxide/catalyst mixture, while the ionic liquid is "free" within reaction chamber 2, or ionic liquid 8 may be enclosed within a receptacle, while the peroxide/catalyst mixture is not enclosed in a separate receptacle. Further alternatively, the catalyst may be dissolved (soluble metal salts) or partly dissolved (partly soluble metal salts) or dispersed (insoluble metals salts or metal oxide compounds) in the ionic liquid. This alternative is particularly advantageous. It is, in principle, also possible to enclose only the catalyst within a separate receptacle, while the ionic liquid and the peroxide are not enclosed. It is only necessary to avoid contact between all three constituents during storage of the device for generating oxygen.

It is desirable to store the peroxide 7, the ionic liquid 8 and the catalyst 9 within the reaction chamber 2 in such an arrangement that all constituents will be able to get intimately mixed once oxygen generation is required. When, for example, an insoluble or only partly soluble metal salt is used as a catalyst, and this catalyst and the ionic liquid are provided in one receptacle, and the peroxide in another receptacle, the catalyst may settle within the ionic liquid during storage. In such a case proper mixing with the peroxide may be inhibited. Quick and perfect mixing of all constituents can be achieved when the peroxide and the soluble or insoluble catalyst are intimately mixed in advance in a dry condition, optionally compacted into moulds, and filled either into the reaction chamber 2 or into a separate receptacle 5 to be placed within the reaction chamber 2, and the ionic liquid is provided in a separate receptacle 6. Quick and perfect mixing can also be achieved when the catalyst is soluble in the ionic liquid, and is essentially dissolved therein. Placing the ionic liquid (or the ionic liquid and the catalyst) in a separate receptacle, although this is not absolutely necessary in a case where peroxide and catalyst (or the peroxide alone) are placed in a receptacle 5, constitutes an advantageous precautionary measure against accidental mixing of the constituents in case of receptacle 5 leakage or breakage. Care must be taken, when UHP and catalyst are mixed, because UHP is highly hygroscopic.

In a situation where oxygen shall be generated, receptacle 5, or receptacles 5 and 6, respectively, are destroyed by a breaking device 18. In Fig. 35, breaking device 18 has the form of a plate, however, means for destroying the receptacle(s) are not limited to plates, and other means are known to persons skilled in the art, for example firing pins or grids. Movement of plate 18 can be achieved by a spring 19 or another activation mechanism. During storage of the device for generating oxygen, spring 19 is under tension and holds plate 18 at a position distant from receptacles 5, 6. Once the tension is released by a suitable trigger mechanism (not shown), spring 19 moves plate 18 towards receptacles 5, 6, and plate 18 destroys receptacles 5, 6. Such a trigger may be, for example, pulling an oxygen mask towards a passenger in an airplane. Another exemplary trigger mechanism is an oxygen sensor sensing a low oxygen condition.

Receptacles 5, 6, and plate 18 are made from materials which guarantee that receptacles 5, 6 will be broken or ruptured when hit by plate 18. Exemplary materials are plastic foils or glass for receptacles 5, 6, and thicker plastic material or metal for plate 18.

Destruction of receptacles 5, 6 causes mixing of peroxide, ionic liquid, and catalyst, and initiates oxygen generation. In order to allow that the oxygen exits reaction chamber 2, reaction chamber 2 has an opening. In the illustrated embodiment, the opening is sealed with a gas permeable membrane 16. The opening may be at a different position than shown in Fig. 35, or there may be more than one opening.

In exemplary embodiments, the oxygen generated in the device described herein may be passed through a filter or other purification means as known in the art. The device may be equipped with such means.

The oxygen generating reaction is an only slightly exothermic process, and proceeds at low temperature, i.e. below 150°C, or even below 120°C or below 100°C. Therefore, reaction chamber 2 does not need to resist high temperatures, and may be made from lightweight, low melting materials such as plastics. In addition, any bulky insulation is not required. This is particularly advantageous in all cases where weight must be saved and/or space is limited, for example in the case of oxygen masks which shall be installed in an aircraft.

The exemplary device illustrated in Fig. 35 is equipped with two injection devices 11, 11', for examples syringes or other dosing devices. Openings 17, 17' fluidly connect the interior spaces of reaction chamber 2 and of injection devices 11, 11' respectively.

The injection device 11 comprises a receptacle 12, a slide bar 13 and a spike 14. The injection device 11' comprises a receptacle 12', a slide bar 13' and a spike 14'. Spikes 14, 14' are held in place by fixtures 15, 15'. Receptacles 12, 12' are made from a material which can easily be ruptured, for example bags made from plastic foils. Receptacle 12 contains an acidic compound and receptacle 12' contains a basic compound.

In the exemplary embodiment illustrated in Fig. 35, slide bars 13, 13' can be actuated in an analogous manner as the braking device 18. Once actuated, slide bar 13 pushes receptacle 12 towards spike 14, receptacle 12 is ruptured and acid is injected through opening 17 into reaction chamber 2. Similarly, once actuated, slide bar 13' pushes receptacle 12' towards spike 14', receptacle 12' is ruptured and base is injected through opening 17' into reaction chamber 2.

Actuation of braking device 18 starts the peroxide decomposition reaction in reaction chamber 2. Without interference, the decomposition reaction proceeds until all peroxide compound has been decomposed. The device illustrated in Fig. 35 allows a user to stop the peroxide decomposition reaction by actuating slide bar 13, and to save the peroxide not yet decomposed for later use. Whenever oxygen is needed again, the user may actuate slide bar 13', thus starting the peroxide decomposition reaction again.

The device illustrated in Fig. 35 has only one injection device 11 containing an acidic compound, and one injection device 11' containing a basic compound. Such a device allows to stop and to restart the peroxide composition reaction only once. Providing reaction chamber 2 with several injection devices containing an acid, and with several injection devices containing a base allows to stop and to restart the peroxide decomposition several times. For example, a device 1 for generating oxygen having three injection devices containing acidic compounds and having three injection devices containing basic compounds, allows a user to interrupt and to restart the oxygen production three times, or at least until all of the oxygen source has been decomposed.

If desired, a device as illustrated in Fig. 35 can be also used for reducing or increasing the oxygen flow rate by injecting an acidic compound or a basic compound, respectively into reaction chamber 2, for example when leveling out increasing or decreasing or fluctuating oxygen flow rates shall be achieved.

It is also possible to provide only injection devices filled with acid, or only injection devices filled with base. In such a case, oxygen generating device 1 will only allow to reduce the oxygen flow rate, or to increase the oxygen flow rate, respectively. An alternative exemplary device for generating oxygen in a controlled manner is illustrated in figure 36. In figure 36 the same reference numerals as in figure 35 are used for designating components which correspond to components already illustrated in figure 35.

The device illustrated in figure 36 is suitable for use with acidic ionic liquids. In the illustrated embodiment, reaction chamber 2 contains a mixture of acidic ionic liquid 8, oxygen source 7 and decomposition catalyst 9, for example pellets comprising a peroxide/catalyst mixture dispersed within the ionic liquid. Of course, the acidic ionic liquid, the oxygen source and the catalyst may be provided in any different manner, for example in the form of a dispersion of oxygen source powder in a solution of the catalyst within the ionic liquid.

The exemplary device illustrated in figure 36 is equipped with two injection devices 11, 11', which are identical to the injection devices 11, 11' of the device illustrated in figure 35. Injection device 11 contains an acidic compound, and injection device 11' contains a basic compound. Injection device 11 may be omitted. An oxygen generating device 1 having only injection device 11' allows to start the peroxide decomposition reaction by destroying receptacle 12' and injecting the basic compound through opening 17' into reaction chamber 2. The peroxide decomposition reaction will then proceed until all peroxide compound has been decomposed, and the oxygen generated by the composition reaction will leave reaction chamber 2 through gas permeable membrane 16.

A device for generating oxygen in a controlled manner needs at least one further injection device, for example injection device 11 containing an acidic compound, as illustrated in figure 36. Injecting the acidic compound contained in injection device 11 into reaction chamber 2 allows to decelerate the peroxide decomposition reaction and to reduce a too high oxygen flow rate.

In alternative embodiments, the oxygen generating device illustrated in figure 36 may be provided with one or more additional injection devices containing basic compounds and/or with one or more additional injection devices containing acidic compounds. Such additional injection devices allow to increase or decrease the oxygen production rate, respectively, or to stop and restart the oxygen production several times.

The oxygen produced according to this invention is pure and at a low temperature and, therefore, ideal for applications in air planes, in self-rescuers and in rebreath-ers. However, the use for technical purposes such as in portable welding devices in mining and submarine applications, and in spaceflight, e.g. in control nozzles is also contemplated.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the scope thereof. Therefore, it is intended that the invention not be limited to the particular embodiment disclosed, but that the invention will include all embodiments falling within the scope of the appended claims.

## Claims

1. An oxygen generator comprising
- a composition for generating oxygen comprising an oxygen source, an ionic liquid and a metal oxide compound and
- an acidic compound for decelerating or stopping oxygen production, or if the ionic liquid is an acidic compound or contains an acidic compound,
- optionally, a composition for generating oxygen comprising an oxygen source, an ionic liquid, a metal oxide compound and a basic compound, and
- a further acidic compound for decelerating or stopping the oxygen production,
wherein
- the oxygen source comprises a peroxide compound,
- the ionic liquid is in the liquid state at least in a temperature range from -10°C to +50°C and
- the metal oxide compound is an oxide of a single metal or of two or more different metals, said metal(s) being selected from the metals of groups 2 to 14 of the periodic table of the elements.

2. The oxygen generator according to claim 1, wherein the oxygen source is selected from the group consisting of alkali metal percarbonates, alkali metal perborates, urea hydrogen peroxide, and mixtures thereof.

3. The oxygen generator according to claim 1 or 2, wherein the ionic liquid is at least one salt having a cation and an anion, wherein the cation is selected from the group consisting of imidazolium, pyrrolidinium, ammonium, pyridinium, pyrazolium, piperidinium, phosphonium, and sulfonium cations and/or wherein the anion is selected from the group consisting of dimethylphosphate, methylsulfate, ethylsulfate, trifluoromethylsulfonate, bis(trifluoromethylsulfonyl)imide, chloride, bromide, iodide, tetrafluoroborate, hexafluorophosphate, acetate, and but-3-enoate.

4. The oxygen generator according to any one of claims 1 to 3, wherein the metal oxide compound is selected from the group consisting of MnO₂, Co₃O₄, CrO₃, Ag₂O, CuO, Fe₃O₄ and PbO₂, or is selected from the group consisting of mixed cobalt iron oxides, mixed copper iron oxides, mixed nickel iron oxides, mixed manganese iron oxides, mixed copper manganese oxides, mixed cobalt manganese oxides, mixed nickel manganese oxides, mixed nickel cobalt oxides, mixed lanthanum iron nickel oxides, mixed lanthanum strontium manganese oxides, and mixtures thereof.

5. The oxygen generator according to any one of claims 1 to 4, wherein a pKₐ-value of the acidic compound and/or the further acidic compound is below 5, in particular below 4.5, and/or wherein the oxygen generator comprises an amount of the acidic compound and/or the further acidic compound sufficient for completely reducing the metal in the metal oxide by at least one oxidation state, in particular by two oxidation states.

6. The oxygen generator according to any one of claims 1 to 5, wherein the acidic compound or the further acidic compound is selected from the group consisting of inorganic acids, organic acids, acidic salts and ionic liquids having acidic functionality.

7. The oxygen generator according to any one of claims 1 to 6, wherein the acidic compound or the further acidic compound is selected from the group consisting of hydrochloric acid, sulphuric acid, nitric acid, phosphoric acid, acetic acid, succinic acid, citric acid, benzoic acid, sodium hydrogen sulfate, monopotassium phosphate, 1-ethyl-3-methylimidazolium hydrogen sulfate, trimethylammonium propanesulfonic acid hydrogen sulfate, 1-(4-sulfobutyl)-3-methylimidazolium hydrogen sulfate, and diethylmethylammonium methanesulfonate.

8. The oxygen generator according to any one of claims 1 to 7, wherein the oxygen generator further comprises a basic compound or a further basic compound for accelerating or restarting oxygen production.

9. The oxygen generator according to claim 7, wherein the basic compound or the further basic compound is selected from the group consisting of hydroxides, basic oxides, basic salts and ionic liquids having basic properties, in particular sodium hydroxide, potassium hydroxide, potassium phosphate, sodium acetate, sodium percarbonate, potassium carbonate, calcium hydroxide, calcium oxide, 1-ethyl-3-methylimidazolium acetate, tetrabutylammonium arginine, and tetraethylammonium but-3-enoate.

10. The oxygen generator according to any one of claims 1 to 9, wherein the acidic compound or the further acidic compound is provided in solid from, in particular within a tuner compact, or in the form of a solution or dispersion or in the form of a pure liquid substance, and/or wherein the basic compound or the further basic compound is provided in solid form or in the form of a solution or dispersion or in the form of a pure liquid substance.

11. A method for decelerating or stopping oxygen production of an oxygen generating composition, the method comprising
- providing an oxygen source,
- providing an ionic liquid,
- providing a metal oxide compound,
- generating oxygen by contacting the oxygen source, the ionic liquid and the metal oxide compound and
- decelerating or stopping the oxygen production by adding an acidic compound to the oxygen source, the ionic liquid and the metal oxide compound, or,
if the ionic liquid is an acidic compound or contains an acidic compound, optionally,
- providing an oxygen source,
- providing an ionic liquid,
- providing a metal oxide compound,
- providing a basic compound,
- generating oxygen by contacting the oxygen source, the ionic liquid, the metal oxide compound and the basic compound and decelerating or stopping the oxygen production by adding a further acidic compound to the oxygen source, the ionic liquid, the metal oxide compound and the basic compound,
wherein
- the oxygen source comprises a peroxide compound,
- the ionic liquid is in the liquid state at least in the temperature range from -10°C to +50°C and
- the metal oxide compound is an oxide of one single metal or of two or more different metals, said metal(s) being selected from the metals of groups 2 to 14 of the periodic table of the elements.

12. The method according to claim 11, wherein the oxygen production is accelerated or restarted after a desired time interval by adding a basic compound or a further basic compound, once or multiple times.

13. The method according to claim 11 or 12, wherein a pKₐ-value of the acidic compound and/or the further acidic compound is below 5, in particular below 4.5.

14. The method of any of claims 11 to 13, wherein an amount of the acidic compound and/or the further acidic compound is selected such that it is sufficient for completely reducing the metal in the metal oxide by at least one oxidation state, in particular by two oxidation states.

15. The oxygen generator according to claim 1 for generating oxygen in a controlled manner by adding the acidic compound or, optionally, a basic compound to a composition for generating oxygen, the oxygen generator comprising
- a reaction chamber (2) housing the composition for generating oxygen, the composition comprising a combination of constituents consisting of the oxygen source (7), the ionic liquid (8), and the metal oxide compound (9),
- at least one dosing device (11) housing the acidic compound and, optionally, at least one dosing device (11') housing the basic compound, the dosing device(s) (11, 11') being adapted to introduce the acidic compound and, optionally, the basic compound into the reaction chamber (2),
- means (5, 6) for maintaining at least one of the oxygen source (7), the ionic liquid (8) and the metal oxide compound physically separated from the remaining constituents,
- means (18, 19) for establishing physical contact of the oxygen source (7), the ionic liquid (8) and the metal oxide compound (9), and
- means (16) for allowing oxygen to exit the reaction chamber (2),
wherein
- the metal oxide compound (9) is an oxide of a single metal or of two or more different metals, said metal(s) being selected from the metals of groups 2 to 14 of the periodic table of the elements,
- the oxygen source (7) comprises a peroxide compound,
- the ionic liquid (8) is in the liquid state at least in the temperature range from -10°C to +50°C.

## Patentansprüche

1. Sauerstoffgenerator, der Folgendes umfasst:
- eine Zusammensetzung zur Erzeugung von Sauerstoff, umfassend eine Sauerstoffquelle, eine ionische Flüssigkeit und eine Metalloxidverbindung und
- eine saure Verbindung zum Verlangsamen oder Beenden der Sauerstoffproduktion, oder, wenn die ionische Flüssigkeit eine saure Verbindung ist oder eine saure Verbindung enthält,
- gegebenenfalls eine Zusammensetzung zur Erzeugung von Sauerstoff, umfassend eine Sauerstoffquelle, eine ionische Flüssigkeit, eine Metalloxidverbindung und eine basische Verbindung und
- eine weitere saure Verbindung zum Verlangsamen oder Beenden der Sauerstoffproduktion,
wobei
- die Sauerstoffquelle eine Peroxidverbindung umfasst,
- die ionische Flüssigkeit sich zumindest im Temperaturbereich von -10 °C bis +50 °C im flüssigen Zustand befindet und
- es sich bei der Metalloxidverbindung um ein Oxid von nur einem Metall oder von zwei oder mehr voneinander verschiedenen Metallen handelt, wobei das Metall bzw. die Metalle aus den Metallen der Gruppen 2 bis 14 des Periodensystems der Elemente ausgewählt ist bzw. sind.

2. Sauerstoffgenerator nach Anspruch 1, wobei die Sauerstoffquelle aus der Gruppe bestehend aus Alkalimetallpercarbonaten, Alkalimetallperboraten, Harnstoff-Wasserstoffperoxid und Mischungen davon ausgewählt ist.

3. Sauerstoffgenerator nach Anspruch 1 oder 2, wobei es sich bei der ionischen Flüssigkeit um mindestens ein Salz mit einem Kation und einem Anion handelt, wobei das Kation aus der Gruppe bestehend aus Imidazolium-, Pyrrolidinium-, Ammonium-, Pyridinium-, Pyrazolium-, Piperidinium-, Phosphonium- und Sulfonium-Kationen ausgewählt ist und/oder wobei das Anion aus der Gruppe bestehend aus Dimethylphosphat, Methylsulfat, Ethylsulfat, Trifluormethylsulfonat, Bis(trifluormethylsulfonyl)imid, Chlorid, Bromid, Iodid, Tetrafluoroborat, Hexafluorophosphat, Acetat und But-3-enoat ausgewählt ist.

4. Sauerstoffgenerator nach einem der Ansprüche 1 bis 3, wobei die Metalloxidverbindung aus der Gruppe bestehend aus MnO₂, Co₃O₄, CrO₃, Ag₂O, CuO, Fe₃O₄ und PbO₂ ausgewählt ist oder aus der Gruppe bestehend aus Cobalt-Eisen-Mischoxiden, Kupfer-Eisen-Mischoxiden, Nickel-Eisen-Mischoxiden, Mangan-Eisen-Mischoxiden, Kupfer-Mangan-Mischoxiden, Cobalt-Mangan-Mischoxiden, Nickel-Mangan-Mischoxiden, Nickel-Cobalt-Mischoxiden, Lanthan-Eisen-Nickel-Mischoxiden, Lanthan-Strontium-Mangan-Mischoxiden und Mischungen davon ausgewählt ist.

5. Sauerstoffgenerator nach einem der Ansprüche 1 bis 4, wobei der pKₐ-Wert der sauren Verbindung und/oder der weiteren sauren Verbindung unter 5, insbesondere unter 4,5, liegt und/oder wobei der Sauerstoffgenerator eine Menge der sauren Verbindung und/oder der weiteren sauren Verbindung, die zur vollständigen Reduktion des Metalls in dem Metalloxid um mindestens eine Oxidationsstufe, insbesondere um zwei Oxidationsstufen, ausreicht, umfasst.

6. Sauerstoffgenerator nach einem der Ansprüche 1 bis 5, wobei die saure Verbindung oder die weitere saure Verbindung aus der Gruppe bestehend aus anorganischen Säuren, organischen Säuren, sauren Salzen und ionischen Flüssigkeiten mit saurer Funktionalität ausgewählt ist.

7. Sauerstoffgenerator nach einem der Ansprüche 1 bis 6, wobei die saure Verbindung oder die weitere saure Verbindung aus der Gruppe bestehend aus Salzsäure, Schwefelsäure, Salpetersäure, Phosphorsäure, Essigsäure, Bernsteinsäure, Citronensäure, Benzoesäure, Natriumhydrogensulfat, Monokaliumphosphat, 1-Ethyl-3-methylimidazoliumhydrogensulfat, Trimethylammoniumpropansulfonsäurehydrogensulfat, 1-(4-Sulfobutyl-3-methylimidazoliumhydrogensulfat und Diethylmethylammoniummethansulfonat ausgewählt ist.

8. Sauerstoffgenerator nach einem der Ansprüche 1 bis 7, wobei der Sauerstoffgenerator ferner eine basische Verbindung oder eine weitere basische Verbindung zum Beschleunigen oder erneuten Starten der Sauerstoffproduktion umfasst.

9. Sauerstoffgenerator nach Anspruch 7, wobei die basische Verbindung oder die weitere basische Verbindung aus der Gruppe bestehend aus Hydroxiden, basischen Oxiden, basischen Salzen und ionischen Flüssigkeiten mit basischen Eigenschaften, insbesondere Natriumhydroxid, Kaliumhydroxid, Kaliumphosphat, Natriumacetat, Natriumpercarbonat, Kaliumcarbonat, Calciumhydroxid, Calciumoxid, 1-Ethyl-3-methyl-imidazoliumacetat, Tetrabutylammoniumarginin und Tetraethylammoniumbut-3-enoat ausgewählt ist.

10. Sauerstoffgenerator nach einem der Ansprüche 1 bis 9, wobei die saure Verbindung oder die weitere saure Verbindung in fester Form, insbesondere mit einem Einstellpressling, oder in Form einer Lösung oder Dispersion oder in Form einer reinen flüssigen Substanz bereitgestellt ist und/oder wobei die basische Verbindung oder die weitere basische Verbindung in fester Form oder in Form einer Lösung oder Dispersion oder in Form einer reinen flüssigen Substanz bereitgestellt ist.

11. Verfahren zum Verlangsamen oder Beenden der Sauerstoffproduktion einer sauerstofferzeugenden Zusammensetzung, wobei man bei dem Verfahren:
- eine Sauerstoffquelle bereitstellt,
- eine ionische Flüssigkeit bereitstellt,
- eine Metalloxidverbindung bereitstellt,
- durch Inkontaktbringen der Sauerstoffquelle, der ionischen Flüssigkeit und der Metalloxidverbindung Sauerstoff erzeugt und
- die Sauerstoffproduktion durch Zugabe einer sauren Verbindung zu der Sauerstoffquelle, der ionischen Flüssigkeit und der Metalloxidverbindung verlangsamt oder beendet oder,
wenn die ionische Flüssigkeit eine saure Verbindung ist oder eine saure Verbindung enthält, gegebenenfalls
- eine Sauerstoffquelle bereitstellt,
- eine ionische Flüssigkeit bereitstellt,
- eine Metalloxidverbindung bereitstellt,
- eine basische Verbindung bereitstellt,
- durch Inkontaktbringen der Sauerstoffquelle, der ionischen Flüssigkeit, der Metalloxidverbindung und der basischen Verbindung Sauerstoff erzeugt und die Sauerstoffproduktion durch Zugabe einer sauren Verbindung zu der Sauerstoffquelle, der ionischen Flüssigkeit, der Metalloxidverbindung und der basischen Verbindung verlangsamt oder beendet,
wobei
- die Sauerstoffquelle eine Peroxidverbindung umfasst,
- die ionische Flüssigkeit sich zumindest im Temperaturbereich von -10 °C bis +50 °C im flüssigen Zustand befindet und
- es sich bei der Metalloxidverbindung um ein Oxid von nur einem Metall oder von zwei oder mehr voneinander verschiedenen Metallen handelt, wobei das Metall bzw. die Metalle aus den Metallen der Gruppen 2 bis 14 des Periodensystems der Elemente ausgewählt ist bzw. sind.

12. Verfahren nach Anspruch 11, wobei die Sauerstoffproduktion nach einem gewünschten Zeitintervall durch Zugabe einer basischen Verbindung oder einer weiteren basischen Verbindung ein- oder mehrmals beschleunigt oder erneut gestartet wird.

13. Verfahren nach Anspruch 11 oder 12, wobei der pKₐ-Wert der sauren Verbindung und/oder der weiteren sauren Verbindung unter 5, insbesondere unter 4,5, liegt.

14. Verfahren nach einem der Ansprüche 11 bis 13, wobei eine Menge der sauren Verbindung und/oder der weiteren sauren Verbindung so gewählt wird, dass sie zur vollständigen Reduktion des Metalls in dem Metalloxid um mindestens eine Oxidationsstufe, insbesondere um zwei Oxidationsstufen, ausreicht.

15. Sauerstoffgenerator nach Anspruch 1 zur Erzeugung von Wasserstoff auf kontrollierte Weise durch Zugabe der sauren Verbindung oder gegebenenfalls einer basischen Verbindung zu einer Zusammensetzung zur Erzeugung von Wasserstoff, wobei der Sauerstoffgenerator Folgendes umfasst:
- eine Reaktionskammer (2), die eine Zusammensetzung zur Erzeugung von Sauerstoff beherbergt, wobei die Zusammensetzung eine Kombination von Bestandteilen umfasst, die aus der Sauerstoffquelle (7), der ionischen Flüssigkeit (8) und der Metalloxidverbindung (9) bestehen,
- mindestens eine Dosierungsvorrichtung (11), die die saure Verbindung beherbergt, und gegebenenfalls mindestens eine Dosierungsvorrichtung (11'), die die basische Verbindung beherbergt, wobei die Dosierungsvorrichtung bzw. die Dosierungsvorrichtungen (11, 11') zum Eintragen der sauren Verbindung und gegebenenfalls der basischen Verbindung in die Reaktionskammer (2) ausgelegt ist bzw. sind,
- Mittel (5, 6) zum physischen Getrennthalten der Sauerstoffquelle (7), der ionischen Flüssigkeit (8) und/oder der Metalloxidverbindung von den übrigen Bestandteilen,
- Mittel (18, 19) zum Herstellen eines physischen Kontakts der Sauerstoffquelle (7), der ionischen Flüssigkeit (8) und der Metalloxidverbindung (9) und
- Mittel (16) zur Gewährleistung des Austritts von Sauerstoff aus der Reaktionskammer (2),
wobei
- es sich bei der Metalloxidverbindung (9) um ein Oxid von nur einem Metall oder von zwei oder mehr voneinander verschiedenen Metallen handelt, wobei das Metall bzw. die Metalle aus den Metallen der Gruppen 2 bis 14 des Periodensystems der Elemente ausgewählt ist bzw. sind,
- die Sauerstoffquelle (7) eine Peroxidverbindung umfasst,
- die ionische Flüssigkeit (8) sich zumindest im Temperaturbereich von -10 °C bis +50 °C im flüssigen Zustand befindet.

## Revendications

1. Générateur d'oxygène comprenant
- une composition pour la génération d'oxygène comprenant une source d'oxygène, un liquide ionique et un composé de type oxyde métallique et
- un composé acide pour le ralentissement ou l'arrêt de la production d'oxygène, ou si le liquide ionique est un composé acide ou contenant un composé acide,
- éventuellement, une composition pour la génération d'oxygène comprenant une source d'oxygène, un liquide ionique, un composé de type oxyde métallique et un composé basique, et
- un composé acide supplémentaire pour le ralentissement ou l'arrêt de la production d'oxygène,
- la source d'oxygène comprenant un composé de type peroxyde,
- le liquide ionique étant à l'état liquide au moins dans une plage de températures de -10 °C à +50 °C et
- le composé de type oxyde métallique étant un oxyde d'un seul métal ou de deux métaux différents ou plus, ledit ou lesdits métaux étant choisis parmi les métaux des groupes 2 à 14 du tableau périodique des éléments.

2. Générateur d'oxygène selon la revendication 1, la source d'oxygène étant choisie dans le groupe constitué par des percarbonates de métal alcalin, des perborates de métal alcalin, l'urée-peroxyde d'hydrogène, et des mélanges correspondants.

3. Générateur d'oxygène selon la revendication 1 ou 2, le liquide ionique étant au moins un sel possédant un cation et un anion, le cation étant choisi dans le groupe constitué par des cations imidazolium, pyrrolidinium, ammonium, pyridinium, pyrazolium, pipéridinium, phosphonium et sulfonium et/ou l'anion étant choisi dans le groupe constitué par diméthylphosphate, méthylsulfate, éthylsulfate, trifluorométhylsulfonate, bis(trifluorométhylsulfonyl)imide, chlorure, bromure, iodure, tétrafluoroborate, hexafluorophosphate, acétate, et but-3-énoate.

4. Générateur d'oxygène selon l'une quelconque des revendications 1 à 3, le composé de type oxyde métallique étant choisi dans le groupe constitué par MnO₂, Co₃O₄, CrO₃, Ag₂O, CuO, Fe₃O₄ et PbO₂, ou étant choisi dans le groupe constitué par des oxydes mixtes de cobalt et de fer, des oxydes mixtes de cuivre et de fer, des oxydes mixtes de nickel et de fer, des oxydes mixtes de manganèse et de fer, des oxydes mixtes de cuivre et de manganèse, des oxydes mixtes de cobalt et de manganèse, des oxydes mixtes de nickel et de manganèse, des oxydes mixtes de nickel et de cobalt, des oxydes mixtes de lanthane de fer et de nickel, des oxydes mixtes de lanthane de strontium et de manganèse, et des mélanges correspondants.

5. Générateur d'oxygène selon l'une quelconque des revendications 1 à 4, une valeur de pKₐ du composé acide et/ou du composé acide supplémentaire étant inférieure à 5, en particulier inférieure à 4,5, et/ou le générateur d'oxygène comprenant une quantité du composé acide et/ou du composé acide supplémentaire suffisante pour réduire complètement le métal dans l'oxyde métallique d'au moins un état d'oxydation, en particulier d'au moins deux états d'oxydation.

6. Générateur d'oxygène selon l'une quelconque des revendications 1 à 5, le composé acide ou le composé acide supplémentaire étant choisi ou constitué par des acides inorganiques, des acides organiques, des sels acides et des liquides ioniques possédant une fonctionnalité acide.

7. Générateur d'oxygène selon l'une quelconque des revendications 1 à 6, le composé acide ou le composé acide supplémentaire étant choisi dans le groupe constitué par l'acide chlorhydrique, l'acide sulfurique, l'acide nitrique, l'acide phosphorique, l'acide acétique, l'acide succinique, l'acide citrique, l'acide benzoïque, l'hydrogénosulfate de sodium, le phosphate monopotassique, l'hydrogénosulfate de 1-éthyl-3-méthylimidazolium, l'hydrogénosulfate d'acide triméthylammoniumpropanesulfonique, l'hydrogénosulfate de 1-(4-sulfobutyl)-3-méthylimidazolium, et le méthanesulfonate de diéthylméthylammonium.

8. Générateur d'oxygène selon l'une quelconque des revendications 1 à 7, le générateur d'oxygène comprenant en outre un composé basique ou un composé basique supplémentaire pour l'accélération ou le redémarrage de la production d'oxygène.

9. Générateur d'oxygène selon la revendication 7, le composé basique ou le composé basique supplémentaire étant choisi dans le groupe constitué par des hydroxydes, des oxydes basiques, des sels basiques et des liquides ioniques possédant des propriétés basiques, en particulier l'hydroxyde de sodium, l'hydroxyde de potassium, le phosphate de potassium, l'acétate de sodium, le percarbonate de sodium, le carbonate de potassium, l'hydroxyde de calcium, l'oxyde de calcium, l'acétate de 1-éthyl-3-méthylimidazolium, l'arginine tétrabutylammonium, et le but-3-énoate de tétraéthylammonium.

10. Générateur d'oxygène selon l'une quelconque des revendications 1 à 9, le composé acide ou le composé acide supplémentaire étant fourni sous forme solide, en particulier dans un comprimé ajusteur, ou sous la forme d'une solution ou d'une dispersion ou sous la forme d'une substance liquide pure, et/ou le composé basique ou le composé basique supplémentaire étant fourni sous forme solide ou sous la forme d'une solution ou d'une dispersion ou sous la forme d'une substance liquide pure.

11. Procédé pour le ralentissement ou l'arrêt de la production d'oxygène d'une composition de génération d'oxygène, le procédé comprenant
- la mise à disposition d'une source d'oxygène,
- la mise à disposition d'un liquide ionique,
- la mise à disposition d'un composé de type oxyde métallique,
- la génération d'oxygène par mise en contact de la source d'oxygène, du liquide ionique et du composé de type oxyde métallique et
- le ralentissement ou l'arrêt de la production d'oxygène par ajout d'un composé acide à la source d'oxygène, au liquide ionique et au composé de type oxyde métallique, ou,
si le liquide ionique est un composé acide contient un composé acide, éventuellement,
- la mise à disposition d'une source d'oxygène,
- la mise à disposition d'un liquide ionique,
- la mise à disposition d'un composé de type oxyde métallique,
- la mise à disposition d'un composé basique,
- la génération d'oxygène par mise en contact de la source d'oxygène, du liquide ionique, du composé de type oxyde métallique et du composé basique et le ralentissement ou l'arrêt de la production d'oxygène par ajout d'un composé acide supplémentaire à la source d'oxygène, au liquide ionique, au composé de type oxyde métallique et au composé basique,
- la source d'oxygène comprenant un composé de type peroxyde,
- le liquide ionique étant à l'état liquide au moins dans une plage de températures de -10 °C à +50 °C et
- le composé de type oxyde métallique étant un oxyde d'un seul métal ou de deux métaux différents ou plus, ledit ou lesdits métaux étant choisis parmi les métaux des groupes 2 à 14 du tableau périodique des éléments.

12. Procédé selon la revendication 11, la production d'oxygène étant accélérée ou redémarrée après un intervalle de temps souhaité par ajout d'un composé basique ou d'un composé basique supplémentaire, une ou plusieurs fois.

13. Procédé selon la revendication 11 ou 12, une valeur de pKₐ du composé acide et/ou du composé acide supplémentaire étant inférieure à 5, en particulier inférieure à 4,5.

14. Procédé selon l'une quelconque des revendications 11 à 13, une quantité du composé acide et/ou du composé acide supplémentaire étant choisie pour qu'elle soit suffisante pour réduire complètement le métal dans l'oxyde métallique d'au moins un état d'oxydation, en particulier d'au moins deux états d'oxydation.

15. Générateur d'oxygène selon la revendication 1 pour la génération d'oxygène d'une manière régulée par ajout du composé acide ou, éventuellement, d'un composé basique à une composition pour la génération d'oxygène, le générateur d'oxygène comprenant
- un compartiment de réaction (2) renfermant la composition pour la génération d'oxygène, la composition comprenant une combinaison de constituants consistant en la source d'oxygène (7), le liquide ionique (8), et le composé de type oxyde métallique (9),
- au moins un dispositif d'ajout dosé (11) renfermant le composé acide et, éventuellement, au moins un dispositif d'ajout dosé (11') renfermant le composé basique, le ou les dispositifs d'ajout dosé (11, 11') étant conçus pour introduire le composé acide et, éventuellement, le composé basique dans le compartiment de réaction (2),
- un moyen (5, 6) pour le maintien d'au moins l'un parmi la source d'oxygène (7), le liquide ionique (8) et le composé de type oxyde métallique séparé physiquement des constituants restants,
- un moyen (18, 19) pour établir un contact physique de la source d'oxygène (7), du liquide ionique (8) et du composé de type oxyde métallique (9), et
- un moyen (16) pour permettre à l'oxygène de sortir du compartiment de réaction (2),
- le composé de type oxyde métallique (9) étant un oxyde d'un seul métal ou de deux métaux différents ou plus, ledit ou lesdits métaux étant choisis parmi les métaux des groupes 2 à 14 du tableau périodique des éléments,
- la source d'oxygène (7) comprenant un composé de type peroxyde,
- le liquide ionique (8) étant à l'état liquide au moins dans une plage de températures de -10 °C à +50 °C.
